# EUROPEAN PATENT APPLICATION

(11) **EP 3 591 184 A1**
(43) Date of publication of application: **08.01.2020**
(21) Application number: 19182158.6
(22) Date of filing: 25.06.2019
(51) Int. Cl.: F02B 23/06, F02D 35/02, F02D 41/30, F02D 41/40

(54) **FUEL INJECTION CONTROL DEVICE AND FUEL INJECTION CONTROL METHOD FOR DIESEL ENGINE**

(30) Priority: 06.07.2018 JP 2018128991
(71) Applicant: Mazda Motor Corporation, Aki-gun, Hiroshima 730-8670 (JP)
(72) Inventor: MATSUO, Takeru, Fuchu-cho, Aki-gun, Hiroshima 730-8670 (JP); KAKUDA, Yoshie, Fuchu-cho, Aki-gun, Hiroshima 730-8670 (JP); NAKASHIMA, Kengo, Fuchu-cho, Aki-gun, Hiroshima 730-8670 (JP); KIM, Sangkyu, Fuchu-cho, Aki-gun, Hiroshima 730-8670 (JP); SHIMO, Daisuke, Fuchu-cho, Aki-gun, Hiroshima 730-8670 (JP); NAMBA, Shun, Fuchu-cho, Aki-gun, Hiroshima 730-8670 (JP)
(74) Representative: Müller-Boré & Partner Patentanwälte PartG mbB

(57) **Abstract**

The control unit that controls fuel injection of a diesel engine includes a split injection control unit that causes a fuel injection valve to execute pre-injection and post-injection, a setting unit that sets a fuel injection amount or a fuel injection timing in the pre-injection so that a target heat release rate characteristic, by which a ratio between a first peak and a second peak, which are peaks of an increase rate of combustion pressure accompanying the pre- and post-injection, becomes a target value set in advance, can be obtained, a prediction unit that predicts an occurrence time or a peak value of the first peak based on the injection amount or injection timing and a parameter related to a combustion environmental factor, and a correction unit that corrects the fuel injection amount or the fuel injection timing set by the setting unit.

## Description

### TECHNICAL FIELD

The present invention relates to a fuel injection control device and a fuel injection control method for a diesel engine that performs fuel injection into a combustion chamber by pre-injection and post-injection during one cycle.

### BACKGROUND

A diesel engine that employs combustion by a premixed compression ignition system has an advantage, in which fuel economy is improved by shortening of a combustion period, but has problems, such as an increase in combustion noise and an increase in the amount of soot generated. For this reason, at present, combustion of the premixed compression ignition system is applied exclusively to low load operating range. There has been known a technique for performing a plurality of fuel injections into a combustion chamber in one cycle to suppress combustion noise and soot. For example, Japanese Patent No. 5873059 discloses a technique for reducing noise by executing pre-injection and post-injection at specific intervals and controlling a timing of occurrence of a peak of combustion pressure due to each injection.

It has been found that the optimization of a ratio of a peak of combustion pressure by pre-injection and a peak of combustion pressure by post-injection, a timing of occurrence of both peaks, and the like may contribute to reduction of combustion noise. However, at the practical level where a combustion environmental factor changes every moment, in a case where application of premixed compression ignition combustion is extended to medium and high load operation ranges, no concrete means for suppressing combustion noise to a practically acceptable level has been proposed yet in actuality.

### SUMMARY

An object of the present invention is to provide a fuel injection control device and a fuel injection control method capable of suppressing combustion noise as much as possible in a diesel engine that performs fuel injection into the combustion chamber by pre-injection and post-injection during one cycle.

A fuel injection control device for a diesel engine according to one aspect of the present invention includes a fuel injection valve that injects fuel into a combustion chamber, and a fuel injection control unit that controls operation of the fuel injection valve. The fuel injection control unit includes a split injection control unit configured to cause the fuel injection valve to execute pre-injection to inject fuel at a predetermined first timing and post-injection to inject fuel at a second timing that is later than the pre-injection, a setting unit configured to set a fuel injection amount or a fuel injection timing in the pre-injection so as to obtain a target heat release rate characteristic, by which a ratio of a first peak, which is a rising peak of a heat release rate in the combustion chamber accompanying the pre-injection, and a second peak, which is a rising peak of a heat release rate in the combustion chamber accompanying the post-injection, becomes a target value set in advance, a prediction unit configured to predict an occurrence time of the first peak or a peak value of the first peak based on the fuel injection amount or the fuel injection timing set by the setting unit and a parameter related to a combustion environmental factor of a diesel engine before the split injection control unit causes the fuel injection valve to execute the pre-injection based on the fuel injection amount or the fuel injection timing set by the setting unit, and a correction unit configured to correct the fuel injection amount or the fuel injection timing set by the setting unit based on the occurrence time or the peak value predicted by the prediction unit.

A fuel injection control method for a diesel engine according to another aspect of the present invention is a method of controlling fuel injection operation for a diesel engine system including a fuel injection valve that injects fuel into a combustion chamber, and a fuel injection control unit that controls operation of the fuel injection valve. The method includes causing the fuel injection valve to execute pre-injection for injecting fuel at a predetermined first timing, and post-injection for injecting fuel at a second timing later than the pre-injection, setting a fuel injection amount or a fuel injection timing in the pre-injection so as to obtain a target heat release rate characteristic, by which a ratio of a first peak, which is a rising peak of a heat release rate in the combustion chamber accompanying the pre-injection, and a second peak, which is a rising peak of a heat release rate in the combustion chamber accompanying the post-injection, becomes a target value set in advance, predicting an occurrence time of the first peak or a peak value of the first peak based on a set fuel injection amount or fuel injection timing and a parameter related to a combustion environmental factor of a diesel engine before the fuel injection valve executes the pre-injection based on the set fuel injection amount or fuel injection timing, and correcting the set fuel injection amount or fuel injection timing based on the predicted occurrence time or peak value.

### BRIEF DESCRIPTION OF DRAWINGS

FIG. 1 is a system diagram of a diesel engine to which a fuel injection control device according to the present invention is applied;
FIG. 2A is a perspective view of a crown surface portion of a piston of the diesel engine shown in FIG. 1, and FIG. 2B is a perspective view with a cross section of the piston;
FIG. 3 is an enlarged view of the cross section of the piston shown in FIG. 2B;
FIG. 4 is a cross-sectional view of the piston for illustrating a relationship between the crown surface of the piston and an injection axis of fuel by an injector;
FIG. 5 is a time chart showing a timing of fuel injection and a heat release rate;
FIG. 6 is a diagram schematically showing a state of generation of air-fuel mixture in a combustion chamber;
FIG. 7 is a block diagram showing a control system of a diesel engine;
FIG. 8A is a graph showing an example of a target heat release rate characteristic, and FIG. 8B is a schematic diagram showing peaks of heat release rates generated by combustions of pre-injection and post-injection and a ratio of them, and an interval between these peaks;
FIGS. 9A to 9C are schematic diagrams for explaining a cancellation effect of combustion noise.
FIGS. 10A and 10B are graphs showing correction examples for bringing a predicted heat release rate characteristic closer to the target heat release rate characteristic;
FIG. 11 is a schematic diagram for explaining a combustion environmental factor that affects achievement of the target heat release rate characteristic;
FIG. 12 shows items (A), (B) and (C), wherein the item (A) is a diagram showing a peak delay of pre-combustion due to pilot injection, the item (B) is a prediction model formula of the peak delay, and the item (C) is a calibration result of the prediction model formula;
FIG. 13 shows items (A), (B), (C) and (D), wherein the items (A) and (B) are diagrams showing factors that affect a peak height of pre-combustion due to pilot injection, the item (C) is a prediction model formula of the peak height, and the item (D) is a table showing a calibration result of the prediction model formula;
FIGS. 14 and 15 are time charts showing specific correction examples for making the predicted heat release rate characteristic closer to the target heat release rate characteristic; and
FIG. 16 is a flowchart showing an example of fuel injection control.

### DETAILED DESCRIPTION

### [Overall configuration of engine]

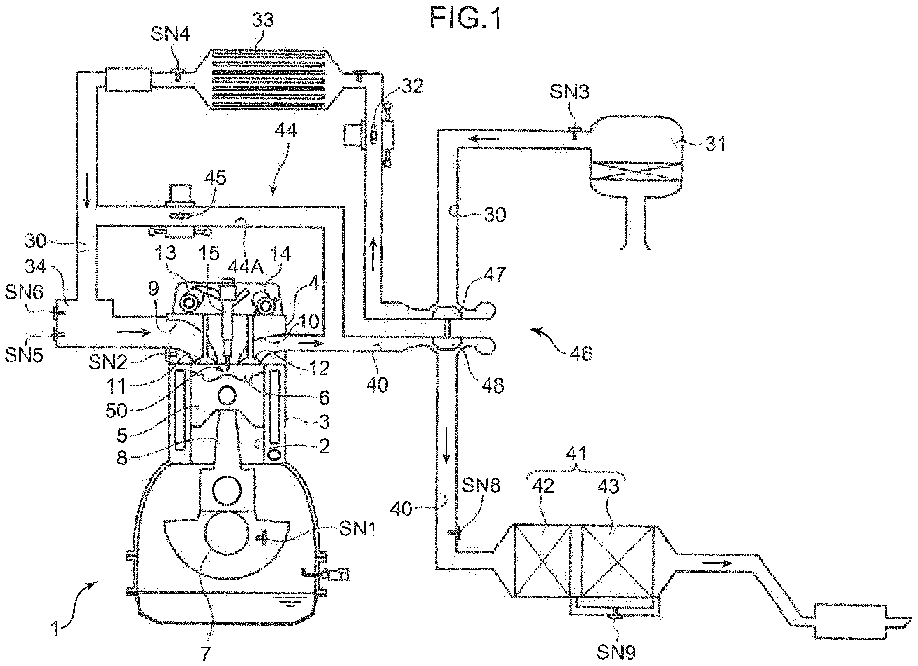

Hereinafter, an embodiment of a fuel injection control device for a diesel engine according to the present invention will be described in detail based on the drawings. First, an overall configuration of a diesel engine system to which a fuel injection control device according to the present invention is applied will be described based on FIG. 1. The diesel engine shown in FIG. 1 is a four-cycle diesel engine mounted on a vehicle as a power source for traveling. The diesel engine system includes an engine main body 1 having a plurality of cylinders 2 and driven by receiving supply of fuel mainly composed of light oil, an intake passage 30 through which intake air introduced into the engine main body 1 flows, an exhaust passage 40 through which exhaust gas discharged from the engine main body 1 flows, an EGR device 44 for returning part of exhaust gas flowing through the exhaust passage 40 to the intake passage 30, and a turbocharger 46 driven by exhaust gas passing through the exhaust passage 40.

The engine main body 1 is an engine that has a plurality of the cylinders 2 (only one of which is shown in FIG. 1) arranged in a direction perpendicular to the paper surface of FIG. 1 and is driven by receiving a supply of fuel mainly composed of light oil. The engine main body 1 includes a cylinder block 3, a cylinder head 4, and a piston 5. The cylinder block 3 has a cylinder liner that forms the cylinder 2. The cylinder head 4 is attached to an upper surface of the cylinder block 3 and blocks an upper opening of the cylinder 2. The piston 5 is accommodated in the cylinder 2 so as to be capable of reciprocating and sliding, and is connected to the crankshaft 7 with a connecting rod 8 interposed between them. In response to a reciprocating motion of the piston 5, the crankshaft 7 rotates about its central axis. A structure of the piston 5 will be described in detail later.

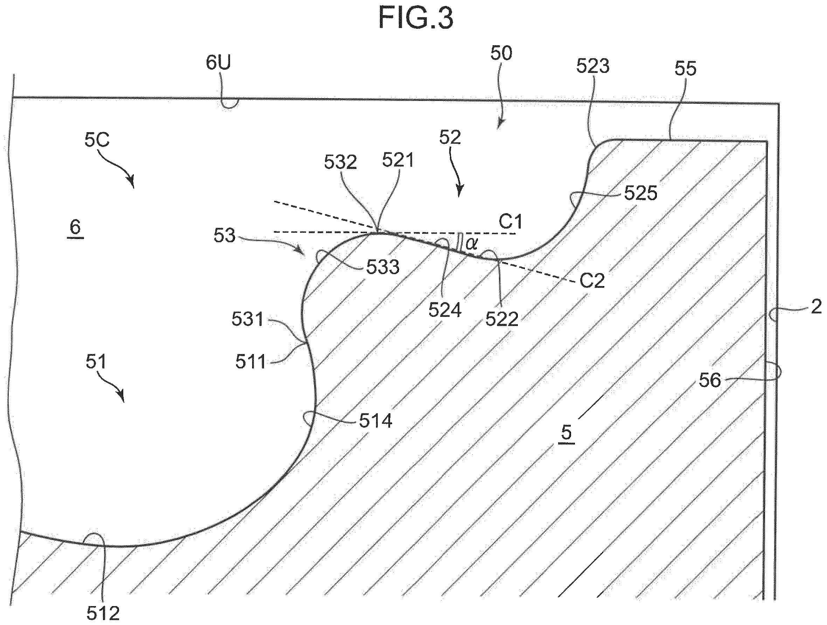

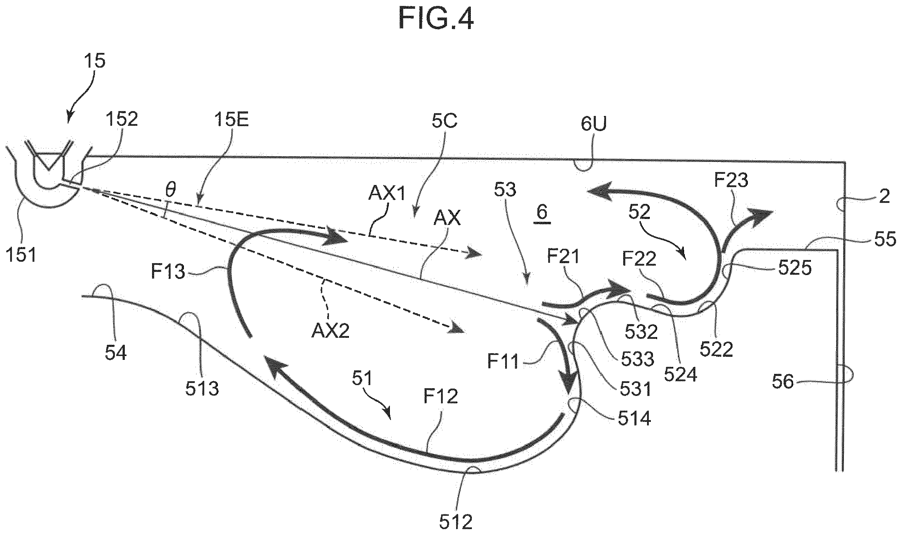

A combustion chamber 6 is formed above the piston 5. The combustion chamber 6 is formed by a lower surface of the cylinder head 4 (a combustion chamber ceiling surface 6U, see FIGS. 3 and 4), the cylinder 2, and a crown surface 50 of the piston 5. The fuel is supplied to the combustion chamber 6 by injection from an injector 15 described later. A mixture of the supplied fuel and air is burned in the combustion chamber 6, and the piston 5 pushed down by an expansion force of the combustion reciprocates in a vertical direction.

A crank angle sensor SN1 and a water temperature sensor SN2 are attached to the cylinder block 3. The crank angle sensor SN1 detects a rotation angle (crank angle) of the crankshaft 7 and a rotational speed of the crankshaft 7 (engine rotational speed). The water temperature sensor SN2 detects a temperature (engine water temperature) of cooling water flowing in the inside of the cylinder block 3 and the cylinder head 4.

An intake port 9 and an exhaust port 10 communicating with the combustion chamber 6 are formed in the cylinder head 4. An intake side opening which is a downstream end of the intake port 9 and an exhaust side opening which is an upstream end of the exhaust port 10 are formed on the lower surface of the cylinder head 4. The cylinder head 4 is assembled with an intake valve 11 for opening and closing the intake side opening and an exhaust valve 12 for opening and closing the exhaust side opening. Note that, although illustration is omitted, a valve type of the engine main body 1 is a four-valve type of two intake valves and two exhaust valves, and two of the intake ports 9 and two of the exhaust ports 10, and two of the intake valves 11 and two of the exhaust valves 12 are provided for each of the cylinders 2.

The cylinder head 4 is provided with an intake side valve mechanism 13 including a camshaft and an exhaust side valve mechanism 14. The intake valve 11 and the exhaust valve 12 are driven to open and close in conjunction with the rotation of the crankshaft 7 by the valve mechanisms 13 and 14. The intake side valve mechanism 13 incorporates an intake WT capable of changing at least an opening timing of the intake valve 11, and the exhaust side valve mechanism 14 incorporates an exhaust WT capable of changing at least a closing timing of the exhaust valve 12.

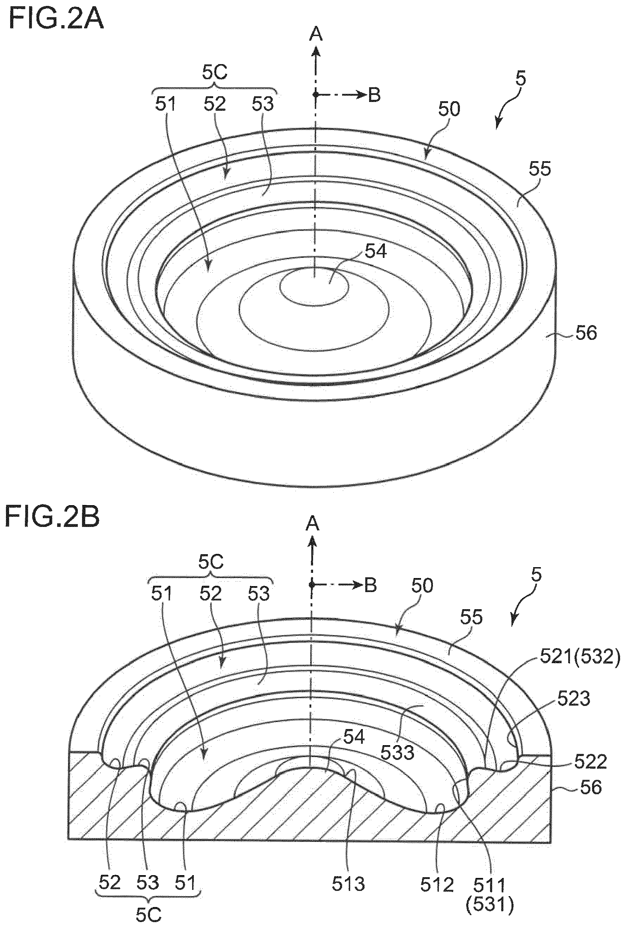

The cylinder head 4 is provided with the injector 15 (fuel injection valve) for injecting fuel into the combustion chamber 6 from a tip portion, one for each of the cylinders 2. The injector 15 injects fuel supplied through a fuel supply pipe (not shown) into the combustion chamber 6. The injector 15 is assembled to the cylinder head 4 so that the tip portion (a nozzle 151; FIG. 4) for injecting fuel is located at or near a radial center of the combustion chamber 6, and injects fuel toward a cavity 5C (FIGS. 2 to 4) described later formed on the crown surface 50 of the piston 5.

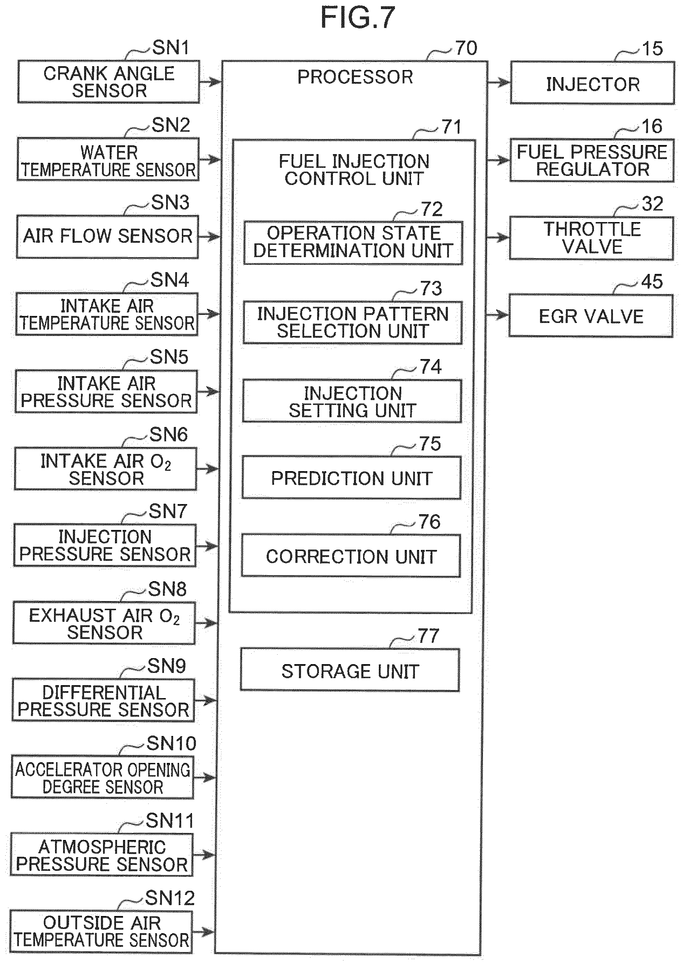

The injector 15 is connected to a pressure accumulation common rail (not shown) common to all the cylinders 2 with the fuel supply pipe interposed between them. In the common rail, high pressure fuel pressurized by a fuel pump (not shown) is stored. The fuel accumulated in the common rail is supplied to the injector 15 of each of the cylinders 2 so that the fuel is injected from each of the injectors 15 into the combustion chamber 6 at a high pressure (about 50 MPa to 250 MPa). Between the fuel pump and the common rail, a fuel pressure regulator 16 (not shown in FIG. 1, see FIG. 7) for changing an injection pressure which is the pressure of the fuel injected from the injector 15 is provided.

The intake passage 30 is connected to one side surface of the cylinder head 4 so as to communicate with the intake port 9. Air (fresh air) taken in from the upstream end of the intake passage 30 is introduced into the combustion chamber 6 through the intake passage 30 and the intake port 9. In the intake passage 30, an air cleaner 31, the turbocharger 46, a throttle valve 32, an intercooler 33, and a surge tank 34 are disposed in this order from the upstream side.

The air cleaner 31 removes a foreign substance during intake to clean the intake air. The throttle valve 32 opens and closes the intake passage 30 in conjunction with the stepping operation of an accelerator (not shown) to adjust a flow rate of intake air in the intake passage 30. The turbocharger 46 sends the intake air to a downstream side of the intake passage 30 while compressing the intake air. The intercooler 33 cools the intake air compressed by the turbocharger 46. The surge tank 34 is a tank that is disposed on an immediately upstream side of an intake manifold connected to the intake port 9 and provides space in which the intake air is evenly distributed to a plurality of the cylinders 2.

In the intake passage 30, an air flow sensor SN3, an intake air temperature sensor SN4, an intake air pressure sensor SN5, and an intake air O₂ sensor SN6 are disposed. The air flow sensor SN3 is disposed on a downstream side of the air cleaner 31 and detects a flow rate of intake air passing through the portion. The intake air temperature sensor SN4 is disposed on a downstream side of the intercooler and detects a temperature of the intake air passing through the portion. The intake air pressure sensor SN5 and the intake air O₂ sensor SN6 are disposed in the vicinity of the surge tank 34, and detect the pressure of intake air passing through the portion and the oxygen concentration of the intake air, respectively. Note that, although not shown in FIG. 1, an injection pressure sensor SN7 (FIG. 7) that detects the injection pressure of the injector 15 is provided.

The exhaust passage 40 is connected to the other side surface of the cylinder head 4 so as to communicate with the exhaust port 10. Burned gas (exhaust gas) generated in the combustion chamber 6 is discharged to the outside of a vehicle through the exhaust port 10 and the exhaust passage 40. An exhaust gas purification device 41 is provided in the exhaust passage 40. The exhaust gas purification device 41 incorporates a three-way catalyst 42 for purifying harmful components (HC, CO, NOx) contained in exhaust gas flowing through the exhaust passage 40, and a diesel particulate filter (DPF) 43 for collecting particulate matters contained in exhaust gas.

In the exhaust passage 40, an exhaust air O₂ sensor SN8 and a differential pressure sensor SN9 are disposed. The exhaust air O₂ sensor SN8 is disposed between the turbocharger 46 and the exhaust gas purification device 41, and detects the oxygen concentration of exhaust gas passing through the portion. The differential pressure sensor SN9 detects a differential pressure between an upstream end and a downstream end of the DPF 43.

The EGR device 44 includes an EGR passage 44A connecting the exhaust passage 40 and the intake passage 30, and an EGR valve 45 provided in the EGR passage 44A. The EGR passage 44A connects a portion of the exhaust passage 40 on an upstream side relative to the turbocharger 46 and a portion of the intake passage 30 between the intercooler 33 and the surge tank 34. Note that an EGR cooler (not shown) that cools exhaust gas (EGR gas) returned from the exhaust passage 40 to the intake passage 30 by heat exchange is disposed in the EGR passage 44A. The EGR valve 45 adjusts a flow rate of exhaust gas flowing through the EGR passage 44A.

The turbocharger 46 includes a compressor 47 disposed on the intake passage 30 side and a turbine 48 disposed in the exhaust passage 40. The compressor 47 and the turbine 48 are integrally rotatably connected by a turbine shaft. The turbine 48 receives energy of exhaust gas flowing through the exhaust passage 40 and rotates. By the compressor 47 rotating in conjunction with the above, air flowing through the intake passage 30 is compressed (supercharged).

### [Detailed structure of piston]

Next, a structure of the piston 5, in particular, a structure of the crown surface 50 will be described in detail. FIG. 2A is a perspective view mainly showing an upper part of the piston 5. The piston 5 includes a piston head on an upper side and a skirt portion located on a lower side. However, FIG. 2A shows the piston head portion having the crown surface 50 on a top surface. FIG. 2B is a perspective view of the piston 5 with a radial cross section. FIG. 3 is an enlarged view of the radial cross section shown in FIG. 2B. Note that, in FIGS. 2A and 2B, a cylinder axial direction A and a radial direction B of the combustion chamber are indicated by arrows.

The piston 5 includes the cavity 5C, a peripheral flat surface portion 55, and a side peripheral surface 56. As described above, part (bottom surface) of a combustion chamber wall surface that defines the combustion chamber 6 is formed by the crown surface 50 of the piston 5, and the cavity 5C is provided on the crown surface 50. The cavity 5C is a portion in which the crown surface 50 is recessed in a downward direction in the cylinder axial direction A, and is a portion that receives injection of fuel from the injector 15. The peripheral flat surface portion 55 is an annular flat surface portion disposed in a region near an outer peripheral edge in the radial direction B on the crown surface 50. The cavity 5C is disposed in a central region in the radial direction B of the crown surface 50 excluding the peripheral flat surface portion 55. The side peripheral surface 56 is a surface in sliding contact with an inner wall surface of the cylinder 2 and is provided with a plurality of ring grooves into which a piston ring (not shown) is fitted.

The cavity 5C includes a first cavity portion 51, a second cavity portion 52, a connecting portion 53, and a ridge portion 54. The first cavity portion 51 is a recess disposed in a central region of the crown surface 50 in the radial direction B. The second cavity portion 52 is an annular recess disposed on an outer peripheral side of the first cavity portion 51 on the crown surface 50. The connecting portion 53 is a portion connecting the first cavity portion 51 and the second cavity portion 52 in the radial direction B. The ridge portion 54 is a mountain-shaped convex portion disposed at a central position in the radial direction B of the crown surface 50 (first cavity portion 51). The ridge portion 54 is convexly provided at a position directly below the nozzle 151 of the injector 15 (FIG. 4).

The first cavity portion 51 includes a first upper end portion 511, a first bottom portion 512, and a first inner end portion 513. The first upper end portion 511 is at the highest position in the first cavity portion 51 and is continuous with the connecting portion 53. The first bottom portion 512 is an annular region in a top view, the first bottom portion being most recessed in the first cavity portion 51. Even in the entire cavity 5C, the first bottom portion 512 is a deepest portion, and the first cavity portion 51 has a predetermined depth (first depth) in the cylinder axial direction A in the first bottom portion 512. In a top view, the first bottom portion 512 is positioned closer to an inner side in the radial direction B with respect to the connecting portion 53.

The first upper end portion 511 and the first bottom portion 512 are connected by a radially recessed portion 514 curved outward in the radial direction B. The radially recessed portion 514 has a portion which is recessed outward in the radial direction B relative to the connecting portion 53. The first inner end portion 513 is located at an innermost radial position in the first cavity portion 51 and is continuous with a lower end of the ridge portion 54. The first inner end portion 513 and the first bottom portion 512 are connected by a curved surface that is gently curved in a skirt-like shape.

The second cavity portion 52 includes a second inner end portion 521, a second bottom portion 522, a second upper end portion 523, a tapered region 524, and a rising wall region 525. The second inner end portion 521 is located at an innermost radial position in the second cavity portion 52 and continues to the connecting portion 53. The second bottom portion 522 is a most recessed region in the second cavity portion 52. The second cavity portion 52 has a depth shallower than the first bottom portion 512 in the cylinder axial direction A at the second bottom portion 522. That is, the second cavity portion 52 is a concave portion located above the first cavity portion 51 in the cylinder axial direction A. The second upper end portion 523 is located at a highest position in the second cavity portion 52 and a radially outermost side, and is continuous with the peripheral flat surface portion 55.

The tapered region 524 is a portion that extends from the second inner end portion 521 toward the second bottom portion 522 and has a surface shape that is inclined radially outward and downward. As shown in FIG. 3, the tapered region 524 has a slope along a slope line C2 that intersects with a horizontal line C1 extending in the radial direction B at a slope angle α.

The rising wall region 525 is a wall surface which is formed so as to rise relatively steeply on a radially outer side relative to the second bottom portion 522. In a cross-sectional shape in the radial direction B, a wall surface of the second cavity portion 52 is curved from a horizontal direction toward an upper direction from the second bottom portion 522 to the second upper end portion 523, and a portion considered as a wall surface close to a vertical wall in the vicinity of the second upper end portion 523 is the rising wall region 525. A lower portion of the rising wall region 525 is located on an inner side in the radial direction B with respect to an upper end position of the rising wall region 525. In this manner, a mixture can be prevented from returning too much to an inner side in the radial direction B of the combustion chamber 6, and combustion can be performed by effectively utilizing space (squish space) on a radially outer side than the rising wall region 525.

The connecting portion 53 has a shape projecting radially inward in a knot-like shape between the first cavity portion 51 located on a lower side and the second cavity portion 52 located on an upper side in a cross-sectional shape in the radial direction B. The connecting portion 53 has a lower end portion 531, a third upper end portion 532 (upper end portion in the cylinder axial direction), and a central portion 533 positioned in the center between them. The lower end portion 531 is a continuous portion with the first upper end portion 511 of the first cavity portion 51. The third upper end portion 532 is a continuous portion with the second inner end portion 521 of the second cavity portion 52.

In the cylinder axial direction A, the lower end portion 531 is a lowermost portion of the connecting portion 53, and the third upper end portion 532 is an uppermost portion. The tapered region 524 described above is also a region extending from the third upper end portion 532 toward the second bottom portion 522. The second bottom portion 522 is positioned lower than the third upper end portion 532. That is, the second cavity portion 52 of the present embodiment does not have a bottom surface extending horizontally from the third upper end portion 532 to an outer side in the radial direction B, in other words, the third upper end portion 532 and the peripheral flat surface portion 55 are not connected by a horizontal surface, but the second cavity portion 52 has the second bottom portion 522 which is recessed lower than the third upper end portion 532.

The ridge portion 54 protrudes upward, and its projection height is the same as a height of the third upper end portion 532 of the connecting portion 53 and is at a position recessed from the peripheral flat surface portion 55. The ridge portion 54 is located at the center of a first cavity portion 51 having a circular shape in a top view. In this manner, the first cavity portion 51 is in the form of an annular groove formed around the ridge portion 54.

### [Regarding spatial separation of fuel injection]

Next, a fuel injection state into the cavity 5C by the injector 15 and flow of mixture after injection will be described based on FIG. 4. FIG. 4 is a simple cross-sectional view of the combustion chamber 6 and shows a relationship between the crown surface 50 (cavity 5C) and an injection axis AX of injected fuel 15E injected from the injector 15, and arrows F11, F12, F13, F21, F22, and F23 that schematically represent flow of the mixture after injection.

The injector 15 includes the nozzle 151 arranged to project downward from a combustion chamber ceiling surface 6U (a lower surface of the cylinder head 4) to the combustion chamber 6. The nozzle 151 has an injection hole 152 from which fuel is injected into the combustion chamber 6. Although one of the injection holes 152 is shown in FIG. 4, a plurality of the injection holes 152 are arranged at equal pitches in a circumferential direction of the nozzle 151 in actuality. The fuel injected from the injection holes 152 is injected along the injection axis AX in the diagram. The injected fuel diffuses at a spray angle θ. FIG. 4 shows an upper diffusion axis AX1 showing upward diffusion with respect to the injection axis AX, and a lower diffusion axis AX2 showing downward diffusion. The spray angle θ is an angle formed by the upper diffusion axis AX1 and the lower diffusion axis AX2.

The injection hole 152 can inject fuel toward the connecting portion 53 of the cavity 5C. That is, by causing the fuel injection operation to be performed from the injection hole 152 at a predetermined crank angle of the piston 5, the injection axis AX can be directed to the connecting portion 53. FIG. 4 shows a positional relationship between the injection axis AX and the cavity 5C at the predetermined crank angle. The fuel injected from the injection hole 152 is blown to the connecting portion 53 while being mixed with air in the combustion chamber 6 to form an air-fuel mixture.

As shown in FIG. 4, the fuel 15E injected toward the connecting portion 53 along the injection axis AX collides with the connecting portion 53 and then is spatially separated into a portion in a direction of the first cavity portion 51 (downward direction) (an arrow F11) and a portion in a direction of the second cavity portion 52 (upward direction) (an arrow F21). That is, fuel injected toward the central portion 533 of the connecting portion 53 is separated into upper and lower portions, and, after that, the portions of fuel are mixed with air present in the first and second cavity portions 51 and 52, and flow along a surface shape of the cavity portions 51 and 52.

Specifically, an air-fuel mixture moving in the direction of the arrow F11 (downward direction) enters the radially recessed portion 514 of the first cavity portion 51 from the lower end portion 531 of the connecting portion 53, and flows in a downward direction. After the above, the air-fuel mixture changes its flowing direction from the downward direction to an inner side direction in the radial direction B according to a curved shape of the radially recessed portion 514, and flows according to a bottom surface shape of the first cavity portion 51 having the first bottom portion 512 as shown by the arrow F12. At this time, the air-fuel mixture is mixed with air in the first cavity portion 51 and its concentration is gradually lowered. Due to the presence of the ridge portion 54, the bottom surface of the first cavity portion 51 has a shape that rises toward a radial direction center. Therefore, the air-fuel mixture flowing in the direction of the arrow F12 is lifted upward and eventually flows radially outward from the combustion chamber ceiling surface 6U as indicated by an arrow F13. Even in such flow, the air-fuel mixture mixes with air remaining in the combustion chamber 6 to become a homogeneous thin air-fuel mixture.

On the other hand, the air-fuel mixture moving in the direction of the arrow F21 (upward direction) enters the tapered region 524 of the second cavity portion 52 from the third upper end portion 532 of the connecting portion 53 and moves in an obliquely downward direction along the inclination of the tapered region 524. Then, as indicated by the arrow F22, the air-fuel mixture reaches the second bottom portion 522. Here, the tapered region 524 is a surface having an inclination along the injection axis AX. Therefore, the air-fuel mixture can flow smoothly to a radially outer side. That is, the air-fuel mixture reaches a deep position on the radially outer side of the combustion chamber 6 due to the presence of the tapered region 524 and the presence of the second bottom portion 522 where the third upper end portion 532 of the connecting portion 53 is also located below.

After the above, the air-fuel mixture is lifted upward by the rising curved surface between the second bottom portion 522 and the rising wall region 525, and flows to a radially inner side from the combustion chamber ceiling surface 6U. During the flow indicated by the arrow F22 as described above, the air-fuel mixture mixes with air in the second cavity portion 52 to become a homogeneous thin air-fuel mixture. Here, the rising wall region 525 extending generally in a vertical direction is provided on a radially outer side relative to the second bottom portion 522, so that the injected fuel (air-fuel mixture) is blocked from reaching an inner peripheral wall (on which a liner (not shown) exists in general) of the cylinder 2. That is, although the air-fuel mixture can flow to the vicinity of a radially outer side of the combustion chamber 6 by the formation of the second bottom portion 522, the presence of the rising wall region 525 suppresses interference with the inner peripheral wall of the cylinder 2. For this reason, it is possible to suppress the occurrence of cooling loss due to the interference.

Here, the rising wall region 525 has a shape in which its lower portion is positioned on an inner side in the radial direction B with respect to an upper end position. For this reason, flow indicated by the arrow F22 is not excessively strong, and air-fuel mixture can be prevented from returning excessively to an inner side of the radial direction B. When the flow of the arrow F22 is too strong, a partially burned mixture collides with the fuel before newly injected fuel is sufficiently diffused, and homogeneous combustion is inhibited and soot and the like are generated. However, the rising wall region 525 of the present embodiment does not include a shape that is hollowed to a radially outer side, the flow of the arrow F22 is suppressed, and the flow toward an outer side of the radial direction B indicated by the arrow F23 is also generated. In particular, in a later stage of combustion, due to pulling by the reverse squish flow, the flow of the arrow F23 tends to be generated. Therefore, combustion can be performed by effectively utilizing space (the squish space on the peripheral flat surface portion 55) on a radially outer side relative to the rising wall region 252. Therefore, combustion that suppresses generation of soot and the like, and effectively utilizes entire combustion chamber space can be performed.

As described above, fuel injected toward the connecting portion 53 along the injection axis AX collides with the connecting portion 53 and is spatially separated, and utilizes air that exists in space of the first and second cavity portions 51 and 52 to generate an air-fuel mixture. In this manner, space of the combustion chamber 6 can be widely used to form a homogeneous thin air-fuel mixture, and generation of soot and the like can be suppressed at the time of combustion.

### [Regarding temporal separation of fuel injection]

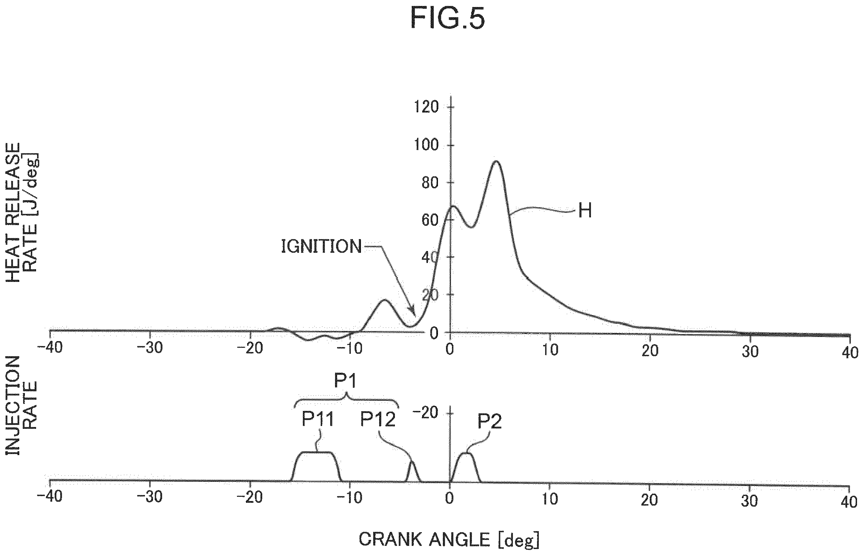

In the present embodiment, in addition to the above-described spatial separation of the fuel injection, an example in which air in the combustion chamber 6 is more effectively used by being separated in time will be shown. FIG. 5 is a time chart showing an example of a timing of fuel injection from the injector 15 to the cavity 5C and a heat release rate characteristic H at that time. The operation of fuel injection by the injector 15 is controlled by a fuel injection control unit 71 (see FIG. 7) described later. The fuel injection control unit 71 (split injection control unit) performs, per cycle, pre-injection for injecting fuel at a predetermined first timing, and post-injection for injecting fuel at a second timing later than the pre-injection.

The present embodiment shows an example, in which the fuel injection control unit 71 causes the injector 15 to execute pilot injection P1 as the pre-injection and main injection P2 as the post-injection. The main injection P2 is fuel injection that is executed at a timing (the second timing) at which the piston 5 is located near a compression top dead center (TDC). FIG. 5 shows an example in which the main injection P2 is performed at a timing slightly delayed from TDC. The pilot injection P1 is fuel injection that is executed at a timing (the first timing) earlier than the main injection P2 and earlier than TDC. The present embodiment shows an example, in which the pilot injection P1 is divided into a first pilot injection P11 on an advance side and a second pilot injection P12 on a retard side.

FIG. 5 shows an example in which the first pilot injection P11 is executed in a period from a crank angle -CA16 to -CA12. An injection rate peak value of fuel is the same between the first pilot injection P11 and the main injection P2, but a fuel injection period is set to be longer in the former. The second pilot injection P12 is a small amount of fuel injection executed between the first pilot injection P11 and the main injection P2. The second pilot injection P12 is executed for the purpose of reducing noise by making a valley between peaks in the heat release rate characteristic H (a valley near crank angles CA2 to 3deg) as small as possible. However, the second pilot injection P12 may be omitted.

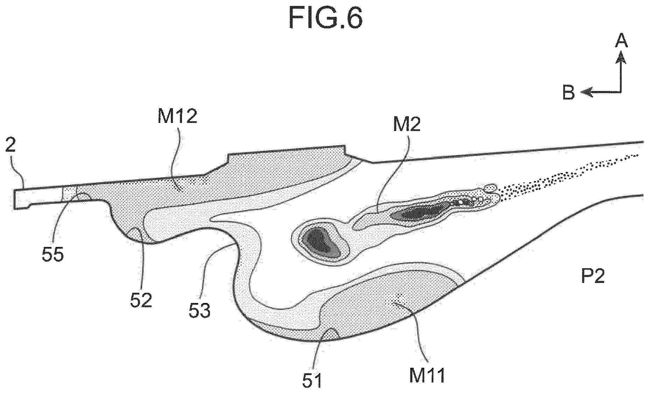

The fuel injection directed to the connecting portion 53 described above is executed at the time of the first pilot injection P11. The main injection P2 is injection that is performed between upper and lower air-fuel mixtures of fuel (air-fuel mixture) injected by the first pilot injection P11 after the fuel is spatially separated into the first cavity portion 51 on a lower side and the second cavity portion 52 on an upper side as described above. This point will be described based on FIG. 6. FIG. 6 is a diagram schematically showing a state of generation of air-fuel mixture in the combustion chamber 6 at a timing at which the main injection P2 ends.

Injected fuel of the first pilot injection P11 is blown to the connecting portion 53 while being mixed with air in the combustion chamber 6 to form an air-fuel mixture. By being blown to the connecting portion 53, the air-fuel mixture is separated into a lower mixture M11 directed to the first cavity portion 51 and an upper mixture M12 directed to the second cavity portion 52 as shown in FIG. 6. This is the spatial separation of the air-fuel mixture described above. The main injection P2 is executed for creating a new air-fuel mixture by utilizing air remaining in space between two separated mix air-fuel mixtures obtained after the fuel (air-fuel mixture) injected in the pilot injection P1 enters the space of the first and second cavity portions 51 and 52 and is spatially separated.

Further description will be added based on FIG. 6. At an execution timing of the main injection P2, the piston 5 is approximately at a position of TDC. Accordingly, fuel of the main injection P2 is injected toward a position slightly lower than the connecting portion 53. The lower mixture M11 and the upper mixture M12 of the first pilot injection P11 injected previously enter the first cavity portion 51 and the second cavity portion 52, respectively, and are mixed with air in space of the respective portions to be diluted progressively. Immediately before the main injection P2 is started, unused air (air not mixed with fuel) is present between the lower mixture M11 and the upper mixture M12. An egg shape of the first cavity portion 51 contributes to the formation of such an unused air layer. The injected fuel of the main injection P2 is in a form of entering between the lower mixture M11 and the upper mixture M12, and mixed with the unused air to become a second mixture M2. This is the temporal separation of fuel injection. As described above, in the present embodiment, the combustion effectively utilizing air present in the combustion chamber 6 can be performed by the spatial and temporal separation of fuel injection.

### [Control configuration]

FIG. 7 is a block diagram showing a control configuration of the diesel engine system. An engine system of the present embodiment is integrally controlled by a processor 70 (a fuel injection control device of a diesel engine). The processor 70 includes a CPU, a ROM, a RAM, and the like. The processor 70 receives detection signals from various sensors mounted on a vehicle. In addition to the sensors SN1 to SN9 described above, the vehicle includes an accelerator opening degree sensor SN10 for detecting an accelerator opening, an atmospheric pressure sensor SN11 for measuring an atmospheric pressure of a traveling environment of the vehicle, and an outside air temperature sensor SN12 for measuring a temperature of a traveling environment of the vehicle.

The processor 70 is electrically connected to the crank angle sensor SN1, the water temperature sensor SN2, the air flow sensor SN3, the intake air temperature sensor SN4, the intake air pressure sensor SN5, the intake air O₂ sensor SN6, the injection pressure sensor SN7, the exhaust air O₂ sensor SN8, the differential pressure sensor SN9, the accelerator opening degree sensor SN10, the atmospheric pressure sensor SN11, and the outside air temperature sensor SN12 described above. Information detected by these sensors SN1 to SN12, that is, pieces of information, such as crank angle, engine rotational speed, engine water temperature, intake air flow rate, intake air temperature, intake air pressure, intake oxygen concentration, injection pressure of the injector 15, exhaust oxygen concentration, accelerator opening, outside air temperature, air pressure, and the like are sequentially input to the processor 70.

The processor 70 controls each part of the engine while performing various determinations and calculations based on input signals from the sensors SN1 to SN12 and the like. That is, the processor 70 is electrically connected to the injector 15 (the fuel pressure regulator 16), the throttle valve 32, the EGR valve 45, and the like, and outputs control signals to these devices based on a result of the above calculation, and the like.

The processor 70 functionally includes a fuel injection control unit 71 (split injection control unit, setting unit, calculation unit) for controlling operation of the injector 15, and a storage unit 77. The fuel injection control unit 71 causes the injector 15 to execute, at least in each cycle of an operation range (hereinafter referred to as the PCI range) to which premixed compression ignition combustion is applied, pilot injection (pre-injection) for injecting fuel at a predetermined timing (first timing) before a compression top dead center and main injection (post-injection) for performing fuel injection at a timing (second timing later than the pre-injection) at which the piston 5 is located near the compression top dead center.

The fuel injection control unit 71 executes a predetermined program, so as to operate to functionally include an operation state determination unit 72, an injection pattern selection unit 73 (split injection control unit), an injection setting unit 74 (setting unit), a prediction unit 75, and a correction unit 76.

The operation state determination unit 72 determines an operating state of the engine main body 1 from an engine rotational speed based on a detected value by the crank angle sensor SN1, an engine load based on opening degree information of the accelerator opening degree sensor SN10, and the like. This determination result is used to determine whether or not a current operation range is the PCI range in which the above-described pilot injection P1 and main injection P2 are executed.

The injection pattern selection unit 73 sets a pattern of fuel injection from the injector 15 in accordance with various conditions. In at least the PCI range, the injection pattern selection unit 73 sets a fuel injection pattern including the pilot injection P1 (pre-injection) and the main injection P2 (post-injection) described above.

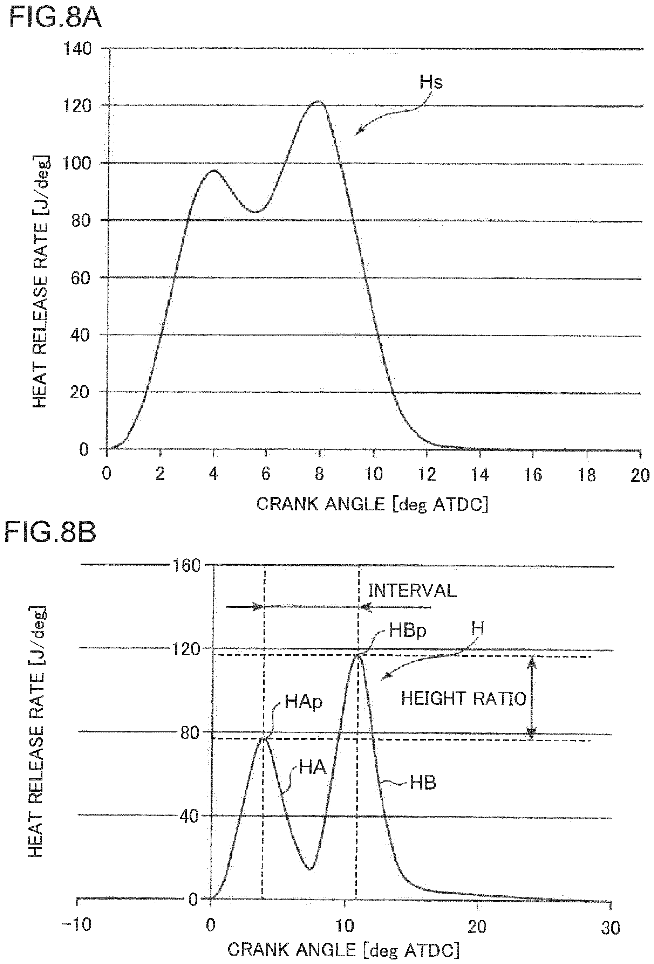

The injection setting unit 74 sets a fuel injection amount or a fuel injection timing from the injector 15 according to various conditions. In the PCI range described above, the injection setting unit 74 sets a fuel injection amount or a fuel injection timing of the pilot injection P1 (in particular, the first pilot injection P11 in the present embodiment) so as to obtain a target heat release rate characteristic, by which a ratio between a first peak, which is an increase peak of a heat release rate in the combustion chamber 6 accompanying the pilot injection P1 (pre-injection) and a second peak, which is an increase peak of a heat derivation rate in the combustion chamber 6 accompanying the main injection P2 (post-injection), becomes a target value set in advance. FIG. 8A shows an example of a target heat release rate characteristic Hs. In the illustrated target heat release rate characteristic Hs, the first peak appears near a crank angle = 4 degrees, and the second peak appears near a crank angle = 8 degrees. By setting the target heat release rate characteristic Hs to a characteristic by which combustion noise, such as diesel knocking noise, can be suppressed most, combustion noise can be reduced as much as possible.

Furthermore, the injection setting unit 74 sets a fuel injection amount from the injector 15 or a fuel injection timing, so that a peak interval between a time at which the first peak occurs and a time at which the second peak occurs becomes an interval at which an amplitude of a pressure wave due to fuel combustion of the pilot injection P1 (the first pilot injection P11) and an amplitude of a pressure wave due to fuel combustion of the main injection P2 cancel each other. In this manner, combustion noises generated by the first pilot injection P11 and the main injection P2 cancel each other, and the combustion noise can be suppressed to an extremely low level. The above will be described in detail later.

Here, in order to obtain the target heat release rate characteristic Hs, it is conceivable to adjust the fuel injection amount or fuel injection timing of not only the first pilot injection P11, but also the second pilot injection P12 and the main injection P2. However, in the present embodiment, the first pilot injection P11 is to be controlled, and the first peak (ignition timing) is to be adjusted.

As in the present embodiment, in a case where fuel injection is performed by being divided into the pre-injection and the post-injection, an ignition timing and the like are determined exclusively based on an execution situation of the pre-injection. If a mode of the pre-injection is defined, combustion accompanying the post-injection will be a relatively robust combustion. Therefore, by appropriately changing a fuel injection amount or a fuel injection timing of the first pilot injection P11 for injecting a relatively large amount of fuel at an earliest timing, control for making a ratio between the first peak and the second peak closer to a target value, and also control for setting an appropriate interval between the first and second peaks can be precisely performed. Note that if a mode (injection amount and injection timing) of the main injection P2 is changed proactively, an entire combustion period may be shifted, which may affect the fuel efficiency and torque.

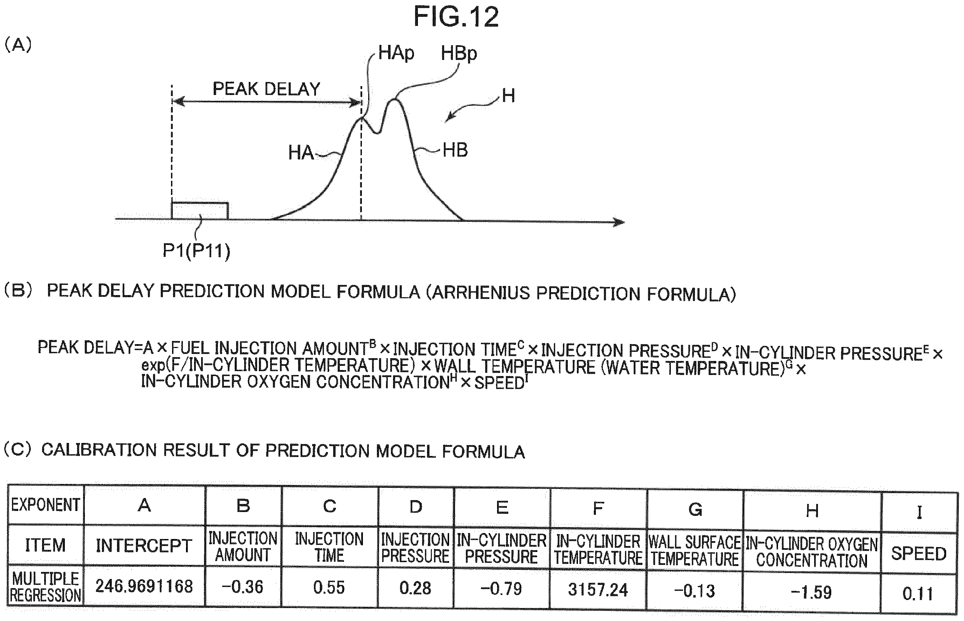

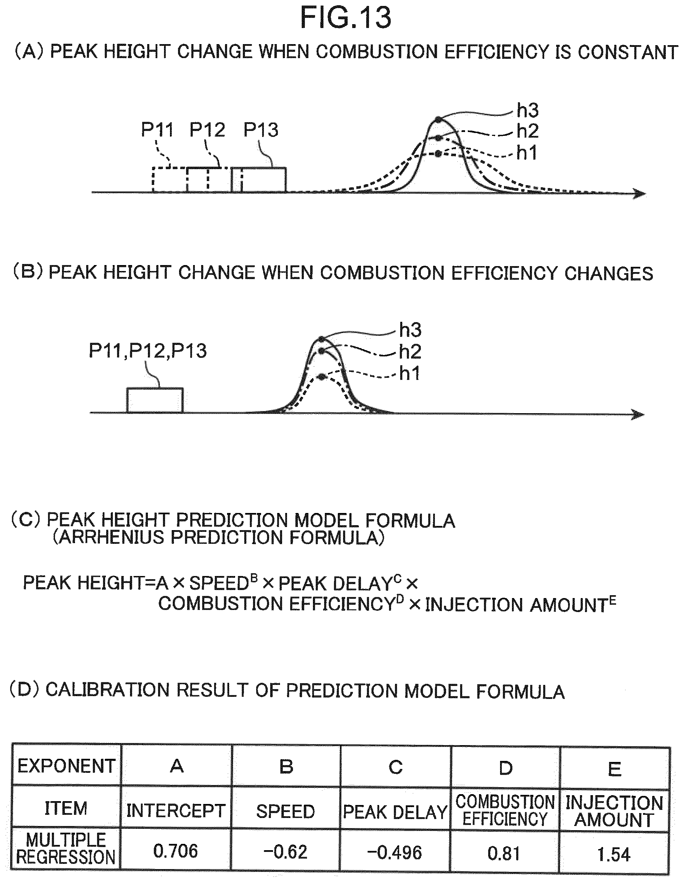

The prediction unit 75 performs processing of predicting at least one of an occurrence time of the first peak and a peak value of the first peak in a current condition based on the fuel injection amount or fuel injection timing of the pilot injection P1 set by the injection setting unit 74 based on the target heat release rate characteristic Hs, and a parameter relating to a combustion environmental factor that affects combustion in the combustion chamber 6. Naturally, this prediction processing is performed before the first pilot injection P11 is performed based on the fuel injection amount or the fuel injection timing set by the injection setting unit 74. For this prediction, the prediction unit 75 uses a predetermined prediction model formula (to be described later with reference to FIGS. 12 and 13). An occurrence time and a peak value of the first peak can be adjusted by feedback control based on detection results of the various sensors SN1 to SN12. However, in the feedback control, diesel knocking noise actually occurs, which may cause a driver to feel uncomfortable. Therefore, the prediction unit 75 predicts a deviation of an occurrence time and a peak value of the first peak from a target value in the target heat release rate characteristic Hs by a feedforward method using the prediction model formula.

The correction unit 76 corrects the fuel injection amount or the fuel injection timing of the first pilot injection P11 set by the injection setting unit 74 based on the occurrence time or the peak value of the first peak predicted by the prediction unit 75. That is, the correction unit 76 corrects the fuel injection amount or the fuel injection timing so as to eliminate deviation between a predicted value of the occurrence time and the peak value of the first peak obtained by the prediction unit 75 with reference to a combustion environmental factor and the target value in the target heat release rate characteristic Hs. That is, before the diesel knocking noise is generated, correction for eliminating the deviation is performed.

The storage unit 77 stores a prediction model formula used when the prediction unit 75 performs predetermined arithmetic processing. The prediction model formula is a formula for predicting a change in the occurrence time of the first peak or the peak value of the first peak with respect to the target heat release rate characteristic Hs, based on a parameter related to a combustion environmental factor of a diesel engine. Note that the parameters related to a combustion environmental factor are, for example, a wall surface temperature of the cylinder block 3, an in-cylinder pressure, an in-cylinder temperature, an in-cylinder oxygen concentration, an engine load, and the like directly or indirectly derived from a measurement value of the sensors SN1 to SN12.

### [Two-stage heat release rate and noise cancellation]

FIG. 8B is a diagram showing a peak of a heat release rate generated by combustion of the pilot injection P1 (the first pilot injection P11) and the main injection P2, a height ratio between them, and an interval between the peaks. The heat release rate characteristic H shown in FIG. 8B more schematically shows the heat release rate characteristic H shown in FIG. 5.

The heat release rate characteristic H is a characteristic deeply related to an increase rate of combustion pressure in the combustion chamber 6, and includes a pre-combustion portion HA which is a peak portion generated by combustion accompanying the pilot injection P1 and a post-combustion portion HB which is a peak portion generated by combustion accompanying the main injection P2. The pre-combustion portion HA and the post-combustion portion HB have a first peak HAp and a second peak HBp at which heat release rates are highest in the respective peak portions. Two peaks are also generated in a change rate (increase rate) of combustion pressure in a manner corresponding to the first and second peaks HAp and HBp.

FIG. 8B shows an example in which a value of the first peak HAp is smaller than a value of the second peak HBp. If a value of the first peak HAp or the second peak HBp is outstandingly high, combustion noise is increased due to this. Therefore, it is desirable to control a heat release ratio between the pre-combustion portion HA and the post-combustion portion HB, and to make a height ratio of the first peak HAp and the second peak HBp as uniform as possible.

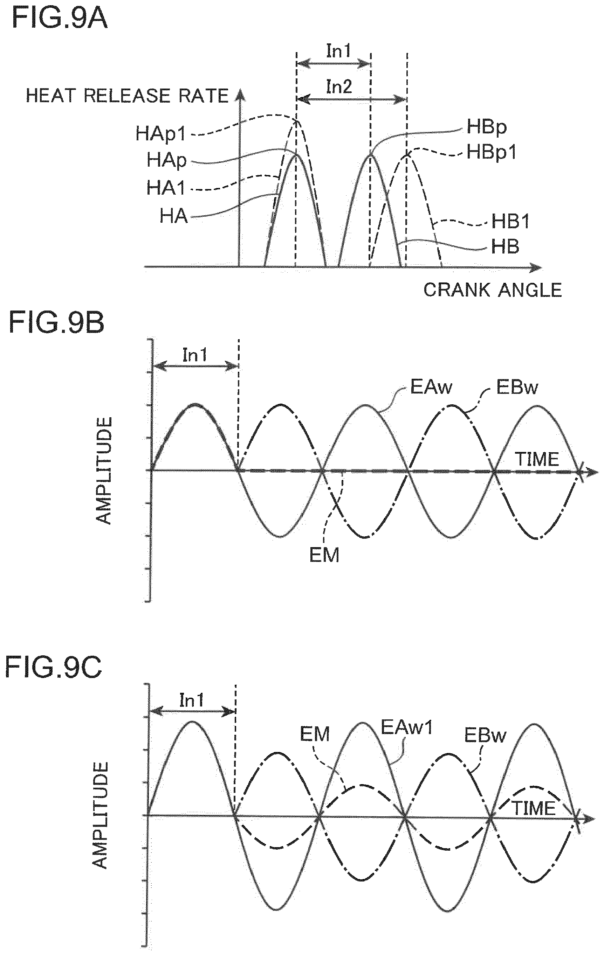

Further, an interval between a time at which the first peak HAp occurs and a time at which the second peak HBp occurs also has a great influence on suppression of combustion noise. If the interval is set to an interval at which an amplitude of a pressure wave (sound wave) due to combustion of the pre-combustion portion HA and an amplitude of a pressure wave due to combustion of the post-combustion portion HB cancel each other, an expressed pressure wave (combustion noise) can be suppressed by a frequency effect. This point will be described based on FIG. 9.

FIG. 9A to FIG. 9C are schematic diagrams for explaining a cancellation effect of combustion noise. In FIG. 9A, the pre-combustion portion HA having the first peak HAp of a heat release rate of a certain height and the post-combustion portion HB having the second peak HBp of a heat release rate of the same height as the first peak HAp are drawn schematically by solid lines. An interval between the first peak HAp and the second peak HBp is set to a first interval In1 in which pressure waves due to respective combustions cancel each other. Further, FIG. 9A shows, as a comparative example, a post-combustion portion HB1 having a peak HAp1 at the same height as the first peak HAp but occurring at a second interval In2 longer than the first interval In1, and a pre-combustion portion HA1 having a peak HAp1 higher than the first peak HAp by a dotted line.

FIG. 9B shows a pre-pressure wave EAw generated due to combustion of the pre-combustion portion HA and a post-pressure wave EBw generated due to combustion of the post-combustion portion HB. Since peak heights of the first peak HAp and the second peak HBp are the same, an amplitude of the pre-pressure wave EAw and an amplitude of the post-pressure wave EBw are the same. Further, the first interval In1 is set to 1/2 of a period of the pre-pressure wave EAw and the post-pressure wave EBw. In this case, the pre-pressure wave EAw and the post-pressure wave EBw have opposite phases and interfere with each other to cancel each other, and an amplitude of an associated wave EM of these waves becomes zero. That is, combustion noise is canceled by a cancellation effect.

On the other hand, in a case where the post-combustion portion HB1 of the comparative example is generated at the second interval In2 with respect to the pre-combustion portion HA, the pre-pressure wave EAw and the post-pressure wave EBw do not have completely opposite phases. In this case, a portion in which the cancellation effect of both the pressure waves EAw and EBw shown in FIG. 9B is diminished and the associated wave EM is amplified may be generated. For example, when both the pressure waves EAw and EBw have the same phase, the associated wave EM has a large amplitude as both the pressure waves EAw and EBw are added together. That is, combustion noise increases.

The cancellation effect becomes maximum when amplitudes of both the pressure waves EAw and EBw are the same. FIG. 9C shows a pre-pressure wave EAw1 generated due to combustion of the pre-combustion portion HA1 of the comparative example and the above-described post-pressure wave EBw. Since an amplitude of the pre-pressure wave EAw1 is larger than the amplitude of the post-pressure wave EBw, the associated wave EM has an amplitude corresponding to the difference even when the first interval In1 is employed and both of them have opposite phases. Therefore, a cancellation effect of combustion noise is reduced.

In view of the above points, the injection setting unit 74 desirably controls the fuel injection operation of the injector 15, in order to reduce a difference between the first peak HAp and the second peak HBp as much as possible and obtain an interval at which the pre-pressure wave EAw and the post-pressure wave EBw cancel each other. That is, it is desirable to set the target heat release rate characteristic Hs by which a cancellation effect of combustion noise can be exerted, and set a fuel injection amount or a fuel injection timing in the pilot injection P1 or the main injection P2 (especially, the first pilot injection P11) so that combustion achieving the target heat release rate characteristic Hs is performed.

### [Basic form of correction of heat release rate characteristic]

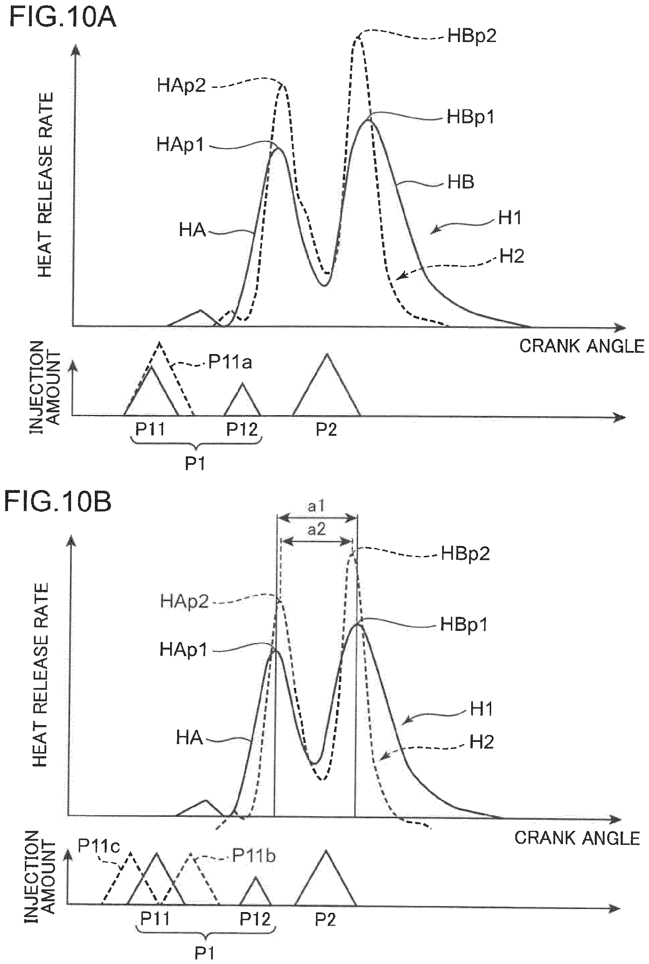

Next, a basic form of correction of a heat release rate characteristic by the correction unit 76 will be described. FIGS. 10A and 10B are graphs showing correction for bringing a predicted heat release rate characteristic Hp predicted by the prediction unit 75 closer to the target heat release rate characteristic Hs. First, FIG. 10A shows an example of correcting peak values of the first peak HAp and the second peak HBp to target values. When correcting the peak value, an injection amount of the first pilot injection P11 is corrected in a mode where control is simplified most.

A heat release rate characteristic H1 shown by a solid line in FIG. 10A has a first peak HAp1 of a certain peak value in the pre-combustion portion HA and a second peak HBp1 of a certain peak value in the post-combustion portion HB. A case where the heat release rate characteristic H1 is corrected to the heat release rate characteristic H2 shown by a dotted line is illustrated. The first and second peaks HAp2 and HBp2 of the heat release rate characteristic H2 have peak values larger than those of the first and second peaks HAp1 and HBp1 of the heat release rate characteristic H1. Injection amounts of the pilot injection P1 and the main injection P2 shown by solid lines are assumed to be injection amounts with which combustion along the heat release rate characteristic H1 can be executed.

In this case, the correction unit 76 performs control to increase an injection amount of the first pilot injection P11 to an injection amount of injection P11a indicated by a dotted line in the diagram (an injection timing is constant). In this manner, a peak value of a first peak of the pre-combustion portion HA can be increased from HAp1 to HAp2. Further, following this, a peak value of a second peak of the post-combustion portion HB can also be increased from HBp1 to HBp2. Conversely, in order to lower the first peak HAp1, control to reduce the injection amount of the first pilot injection P11 is preferably performed. As described above, by correcting the injection amount of the first pilot injection P11, inclinations of the pre- and post-combustion portions HA and HB and peak values of the first and second peaks HAp1 and HBp1 can be adjusted, and an amplitude (sound pressure) of a pressure wave generated by the combustion can be controlled.

The heat release rate characteristics H1 and H2 can be replaced with the target heat release rate characteristic Hs and the predicted heat release rate characteristic Hp. For example, assume that the heat release rate characteristic H1 indicated by a solid line in FIG. 10A is the target heat release rate characteristic Hs stored in the storage unit 77 and the heat release rate characteristic H2 is the predicted heat release rate characteristic Hp predicted by the prediction unit 75. Then, an injection amount of the pilot injection P1 and the main injection P2 shown by the solid line is an injection amount with which combustion according to the predicted heat release rate characteristic Hp can be executed if an environmental condition (parameter related to a combustion environmental factor) is a steady condition. However, assume that, when the injection amount is employed, the prediction unit 75 predicts that combustion, such as that of the predicted heat release rate characteristic Hp, occurs under a current environmental condition. That is, it is a case where a peak value of the first peak HAp2 predicted by the prediction unit 75 deviates from a peak value of the first peak HAp1 based on the target heat release rate characteristic Hs. In this case, the correction unit 76 corrects the injection amount of the first pilot injection P11 so that the predicted first peak HAp2 approaches the target first peak HAp1, that is, so as to eliminate the deviation. In this case, the injection amount is reduced from P11a to P11.

Next, FIG. 10B shows an example of correcting a peak interval between the first peak HAp and the second peak HBp to a target interval. In a case of correcting the peak interval, an injection timing of the first pilot injection P11 is corrected in a mode where control is simplified most.

The heat release rate characteristic H1 shown in FIG. 10B has a certain peak interval al between the first peak HAp1 of the pre-combustion portion HA and the second peak HBp1 of the post-combustion portion HB. A case where the heat release rate characteristic H1 is corrected to the heat release rate characteristic H2 will be illustrated. A peak interval a2 between the first and second peaks HAp2 and HBp2 of the heat release rate characteristic H2 is shorter than the peak interval a1 of the heat release rate characteristic H1. Injection amounts of the pilot injection P1 and the main injection P2 shown by solid lines are assumed to be injection amounts with which combustion along the heat release rate characteristic H1 can be executed.

In this case, the correction unit 76 performs control to retard an injection timing of the first pilot injection P11 to an injection timing Pllb indicated by a dotted line in the diagram (the injection amount is constant). In this manner, an occurrence time of the first peak of the pre-combustion portion HA can be retarded from HAp1 to HAp2. Along with this, an occurrence time of the second peak HBp2 of the post-combustion portion HB also changes. Here, an example in which the occurrence time is advanced from HBp1 to HBp2, which makes the peak interval a2 shorter than the peak interval a1. Conversely, when the first peak HAp1 is advanced, control for advancing the injection timing of the first pilot injection P11 to an injection timing P11c indicated by a dotted line in the diagram is preferably performed. As described above, by correcting the injection timing of the first pilot injection P11, inclinations of the pre- and post-combustion portions HA and HB and peak intervals of the first and second peaks HAp1 and HBp1 can be adjusted, which makes it possible to control a frequency of a pressure wave generated by the combustion so that a cancellation effect shown in FIG. 9 is generated.

Assume that the heat release rate characteristics H1 and H2 in FIG. 10B are the target heat release rate characteristics Hs and the predicted heat release rate characteristics Hp, respectively. Then, an injection amount of the pilot injection P1 and the main injection P2 shown by the solid line is an injection amount with which combustion according to the predicted heat release rate characteristic Hp can be executed if an environmental condition (parameter related to a combustion environmental factor) is a normal condition. However, assume that, when the injection amount is employed, the prediction unit 75 predicts that combustion, such as that of the predicted heat release rate characteristic Hp, occurs under a current environmental condition. That is, it is a case where an occurrence time of the first peak HAp2 predicted by the prediction unit 75 deviates from an occurrence time of the first peak HAp1 based on the target heat release rate characteristic Hs. In this case, the correction unit 76 corrects an injection timing of the first pilot injection P11 so that an occurrence time of the predicted first peak HAp2 approaches an occurrence time of the target first peak HAp1, that is, so as to eliminate the deviation. In this case, the injection timing is advanced from P11 to P11e.

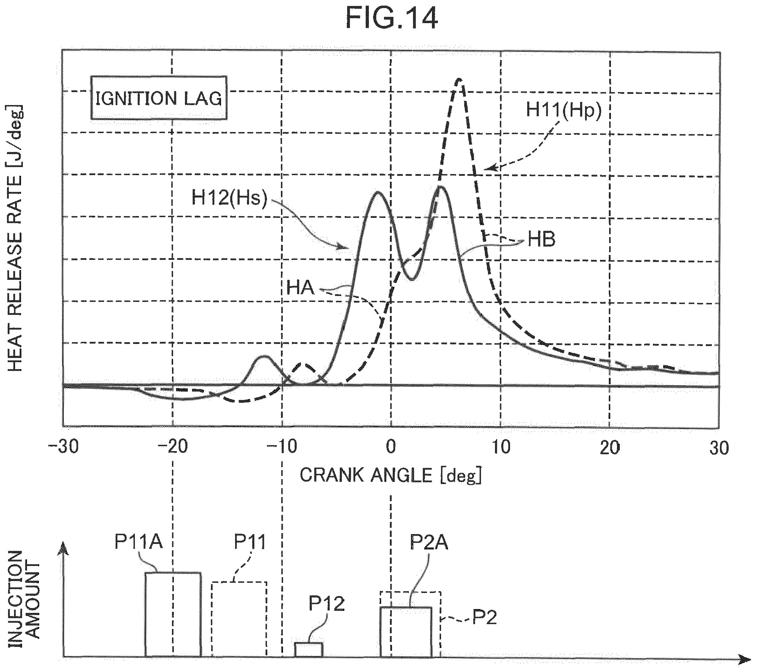

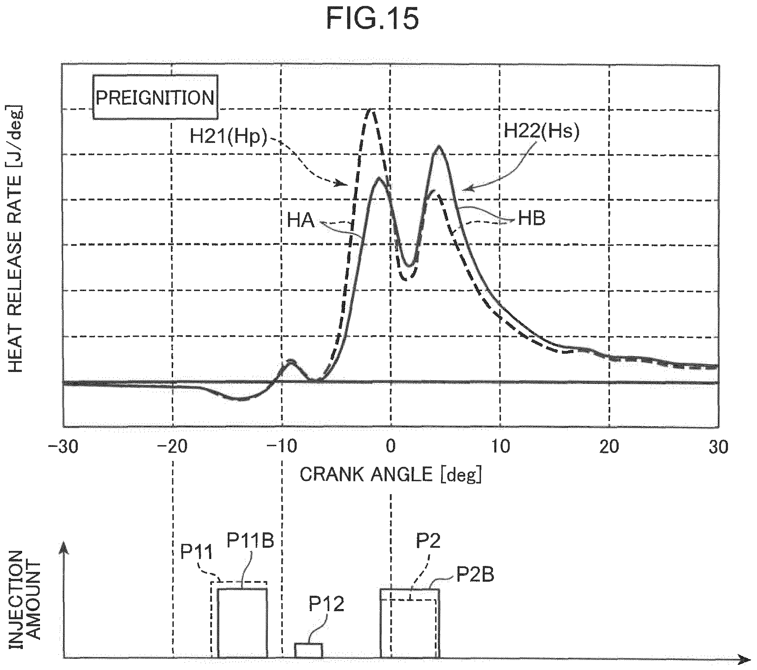

Note that the patterns shown in FIG. 10A and FIG. 10B are basic forms of correction of a heat release rate characteristic, and both patterns may be used in combination in practice. For example, in order to set peak values of the first peak HAp and the second peak HBp to target values, not only an injection amount but also the injection timing of the pilot injection P1 may be changed. Similarly, not only an injection timing but also an injection amount of the pilot injection P1 may be changed in order to set a peak occurrence time to a target value. An example of the injection control is also shown in specific examples of FIGS. 14 and 15 described later.

### [Regarding prediction model formula]

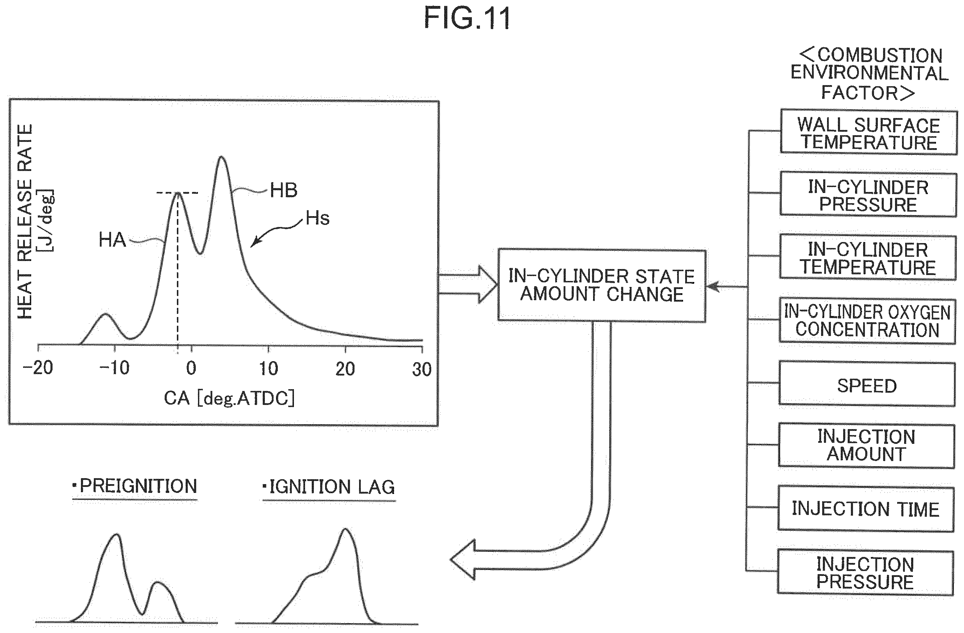

Next, a specific example of a prediction model formula used by the prediction unit 75 will be described. FIG. 11 is a schematic diagram for explaining a combustion environmental factor that affects achievement of a target heat release rate characteristic. Assume that the target heat release rate characteristic Hs as shown in the upper left of FIG. 11 is stored in the storage unit 77. If a combustion environmental factor is within an assumed steady range, the pilot injection P1 (pre-injection) and the main injection P2 (post-injection) are executed at a predetermined reference injection amount and reference injection timing, so that combustion along the target heat release rate characteristic Hs can be achieved in the combustion chamber 6.

However, when the combustion environmental factor deviates from the steady range, an in-cylinder state amount of the combustion chamber 6 changes. Due to the above, there may be a case where the target heat release rate characteristic Hs cannot be obtained even when the reference injection amount and the reference injection timing are employed. For example, preignition and an ignition lag as shown in the lower left of FIG. 11 occur. Preignition is a case in which the pre-combustion portion HA has a high heat release rate as a result of ignition to the air-fuel mixture being performed earlier than a desired timing. Ignition lag is a case in which the pre-combustion portion HA almost disappears as a result of ignition to the air-fuel mixture being delayed from a desired timing.

Parameters related to a main combustion environmental factor that affects an in-cylinder state quantity are, for example, a wall surface temperature of the cylinder block 3, an in-cylinder pressure, an in-cylinder temperature, an in-cylinder oxygen concentration, an engine speed (load), a fuel injection amount, an injection time, and an injection pressure, as listed in the right column of FIG. 11. For example, the wall surface temperature, the in-cylinder pressure, and the in-cylinder temperature fluctuate due to an outside air temperature, an outside air pressure, and an engine coolant temperature. Further, the in-cylinder oxygen concentration changes depending on an amount of EGR gas introduced into the combustion chamber 6, or the like. Further, the combustion environmental factor may also fluctuate due to a transient factor (such as a transient shift in an intake air temperature, a supercharging pressure, or the like) when an operating state changes significantly.

FIG. 12 is a diagram for explaining a model formula for predicting an occurrence time of the first peak HAp of the pre-combustion portion HA in the heat release rate characteristic H. As shown in an item (A) of FIG. 12, an occurrence time of the first peak HAp is predicted by a "peak delay" which is a period from an injection start timing of the pilot injection P1 (the first pilot injection P11 in the present embodiment) to generation of the first peak HAp.

An item (B) of FIG. 12 shows a prediction model formula for the peak delay. Here, a characteristic of each factor is expressed by an Arrhenius prediction formula. On the right side of the formula, in addition to a coefficient A, a fuel injection amount, an injection time, an injection pressure, an in-cylinder pressure, an in-cylinder temperature, a wall surface temperature, an in-cylinder oxygen concentration, and an engine speed listed in the right column of FIG. 11 are described as items of the parameters. The coefficient A is an intercept that causes a value on the right side to fluctuate as a whole. Exponents B to I attached to each item on the right side indicate sensitivity of the item, and a plus sign has a meaning of proportion, and a minus sign has a meaning of inverse proportion. Note that an engine oil temperature and the like may be added to the above items.

An item (C) of FIG. 12 is a table showing a calibration result of the above prediction model formula, and shows a value of the coefficient A and values of the exponents B to I. In a result of the above, while parameters related to injection, such as a fuel injection amount, an injection time, an injection pressure, and the like, are fixed to reference values corresponding to the target heat release rate characteristic Hs, state amounts, such as an outside air temperature, an outside air pressure, an engine coolant water temperature, an EGR gas amount, and the like, are changed to acquire a large number of pieces of data, and a fluctuation of a combustion state (heat release rate) is associated with an in-cylinder state change by multiple regression analysis. It has been confirmed that a difference between a prediction result of the "peak delay" (a crank angle at which the first peak HAp occurs) by the prediction model formula and a "peak delay" actually measured is ±2 deg or less.

Next, a prediction model formula for a peak height (peak value) of the first peak HAp will be described with reference to FIG. 13. The peak height of the first peak HAp can be expressed by a combination of the prediction model formula for the "peak delay" shown in FIG. 12 and a publicly-known combustion efficiency prediction model formula. Items (A) and (B) in FIG. 13 are diagrams showing factors that affect a peak height (peak height of pre-combustion) due to injection (in the present embodiment, the pilot injection).

As shown in the item (A) of FIG. 13, even if combustion efficiency in the combustion chamber 6 is constant, a peak height of a heat release rate characteristic fluctuates due to a fluctuation of the "peak delay". For example, when an injection timing is retarded in the order of P11 → P12 → P13 ("peak delay" fluctuation), a peak height fluctuates to become higher as h1 → h2 → h3 even if combustion efficiency is constant. Further, as shown in FIG. 13B, even if the "peak delay" is fixed, a peak height of the heat release rate characteristic fluctuates when combustion efficiency changes. For example, even if an injection timing is set to the same P11, P12, and P13, the peak height fluctuates to becomes higher as h1 → h2 → h3 in a case where combustion efficiency becomes better in the order of P11 → P12 → P13.

An item (C) of FIG. 13 shows a prediction model formula for the peak height. Like the item (B) of FIG. 12, a characteristic of each factor is expressed by an Arrhenius prediction formula. On the right side of the formula, in addition to a coefficient A, the above-mentioned "peak delay" and combustion efficiency, and an engine speed and an injection amount affecting an absolute value of a peak height are shown as items of parameters. An item (D) of FIG. 13 is a table showing a calibration result of the prediction model formula of the item (C) of FIG. 13. The item (D) of FIG. 13 shows a value of the coefficient A and values of exponents B to E obtained by multiple regression analysis of a large number of pieces of data obtained by changing a value of each item. It has been confirmed that a difference between a prediction result of the "peak height" (a heat release rate at which the first peak HAp occurs) by the prediction model formula and a "peak height" actually measured is ±2 deg or less.

The prediction model formulas as exemplified in the item (B) of FIG. 12 and the item (C) of FIG. 13 are stored in the storage unit 77 in advance. The prediction unit 75 reads out the prediction model formula from the storage unit 77, and performs prediction calculation of an occurrence time and a peak value of the first peak HAp under a current environmental condition.

### [Specific example of correction]

FIGS. 14 and 15 are time charts showing specific correction examples for making the predicted heat release rate characteristic closer to the target heat release rate characteristic. The example shown in FIG. 14 is a control example in a case where ignition performance is deteriorated due to a fluctuation (deterioration) of a combustion environmental factor, and an ignition lag is predicted. Injection amounts and injection timings of the first pilot injection P11 indicated by a dotted line, the second pilot injection P12 indicated by a solid line, and the main injection P2 indicated by a dotted line in the diagram are set so that the target heat release rate characteristic Hs can be obtained in a case where a combustion environmental factor is steady.

However, under combustion environmental factors that cause an ignition lag, if the injection amounts and injection timings of P11, P12, and P2 are employed, combustion of a heat release rate characteristic H11 (the predicted heat release rate characteristic Hp) shown by a dotted line in the diagram occurs. In the heat release rate characteristic H11, while a peak value of the pre-combustion portion HA decreases due to the ignition lag, combustion occurs rapidly in the second half of the combustion. For this reason, a peak value of the post-combustion portion HB is large. In other words, the heat release rate characteristic H11 of a mode in which the pre-combustion portion HA is taken into the post-combustion portion HB is obtained. In this case, combustion noise due to the post-combustion portion HB becomes large.

In such a case, as indicated by a solid line in the diagram, the first pilot injection P11A, in which an injection timing is advanced relative to that of the first pilot injection P11 and the injection amount is also increased, is executed. Further, main injection P2A having an injection amount that is decreased as much as the injection amount of the first pilot injection P11A is increased is executed. The second pilot injection P12 is left unchanged. By correcting the fuel injection as described above, ignition performance is improved, and a target heat release rate characteristic H12 (the target heat release rate characteristic Hs) can be obtained. According to the basic form of heat release rate characteristic correction shown in FIG. 10B, in a case where an ignition lag occurs, only advancing of an injection timing of the first pilot injection P11 is performed. However, FIG. 14 shows an example, in which increasing of an injection amount is executed in addition to advancing of an injection timing, and deterioration in ignition performance is compensated by executing both.

Next, an example shown in FIG. 15 is a control example in a case where ignition performance is too excellent due to fluctuation (deterioration) of a combustion environmental factor, and preignition is predicted. Injection amounts and injection timings of the first pilot injection P11 indicated by a dotted line, the second pilot injection P12 indicated by a solid line, and the main injection P2 indicated by a dotted line in the diagram are set so that the target heat release rate characteristic Hs can be obtained in a case where a combustion environmental factor is steady. Under combustion environmental factors that cause an preignition, if the injection amounts and injection timings of P11, P12, and P2 are employed, combustion of a heat release rate characteristic H21 (the predicted heat release rate characteristic Hp) shown by a dotted line in the diagram occurs. In the heat release rate characteristic H21, while the pre-combustion portion HA is generated at an early crank angle due to the preignition, a peak value of the post-combustion portion HB is small. In this case, combustion noise due to the pre-combustion portion HA becomes large.

In such a case, as indicated by a solid line in the diagram, the first pilot injection P11B, in which an injection timing is retarded relative to that of the first pilot injection P11 and the injection amount is also decreased, is executed. Further, main injection P2B having an injection amount that is increased as much as the injection amount of the first pilot injection P11B is decreased is executed. The second pilot injection P12 is left unchanged. By correcting the fuel injection as described above, preignition is suppressed, and a target heat release rate characteristic H22 (the target heat release rate characteristic Hs) can be obtained. According to the basic form of heat release rate characteristic correction shown in FIG. 10A, in a case where a peak value of the pre-combustion portion HA is lowered, only decreasing of an injection amount of the first pilot injection P11 is performed. However, FIG. 15 shows an example, in which retardation of an injection timing is executed in addition to decreasing of an injection amount, and pre-ignition is improved by executing both.

### [Control flow]

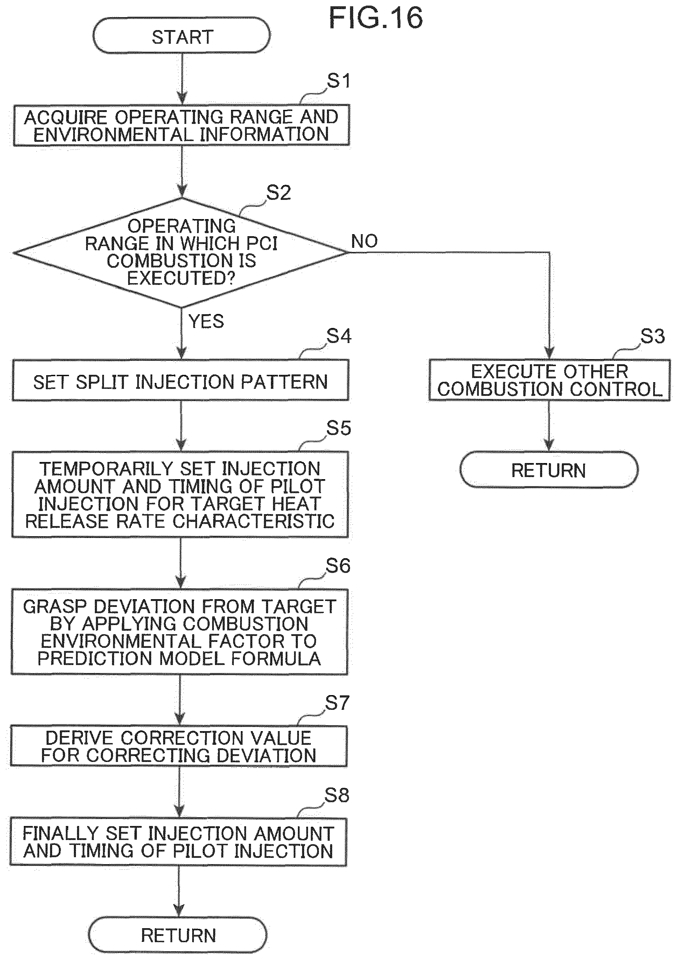

FIG. 16 is a flowchart showing an example of fuel injection control by the fuel injection control unit 71 (FIG. 7) of the processor 70. First, the fuel injection control unit 71 acquires information on an operation range of a vehicle (an operation state of the engine main body 1) and environmental information as the combustion environment factor from the sensors SN1 to SN12 shown in FIG. 7 and other sensors (in-cylinder pressure sensor, and the like) (Step S1).

Next, the operation state determination unit 72 determines whether or not a current operation range corresponds to the PCI range for executing premixed compression ignition combustion based on the information on the operation range acquired in Step S1 (Step S2). In a case where it does not correspond to the PCI range (NO in Step S2), the fuel injection control unit 71 executes other combustion control preset for an operation range other than the PCI range (Step S3). That is, the injection pattern selection unit 73 sets a fuel injection pattern for other combustion control.

On the other hand, in a case where it corresponds to the PCI range (YES in Step S2), the injection pattern selection unit 73 sets a split injection pattern including the pilot injection P1 (pre-injection) and the main injection P2 (post-injection) as exemplified in FIG. 5 (Step S4). Next, the injection setting unit 74 temporarily sets a fuel injection amount or a fuel injection timing of the pilot injection P1 (the first pilot injection P11) (as a result, an ignition timing) so as to achieve the target heat release rate characteristic Hs as exemplified in FIG. 8A (Step S5). As described above, combustion associated with the main injection P2, which is the post-injection, is highly robust combustion if a mode of the pilot injection P1, which is the pre-injection, is determined. Therefore, here, a fuel injection amount or a fuel injection timing of the pilot injection P1 is set proactively. In accordance with this, a fuel injection amount or a fuel injection timing of the main injection P2 is appropriately set.

Next, the prediction unit 75 derives the predicted heat release rate characteristic Hp based on the environmental information (a parameter related to a combustion environmental factor) acquired in Step S1 using the prediction model formula (item (B) of FIG. 12 and item (C) of FIG. 13) stored in the storage unit 77, before the pilot injection P1 of the fuel injection amount or fuel injection timing set in Step S5 by the injection setting unit 74 is executed. Furthermore, the prediction unit 75 compares the predicted heat release rate characteristic Hp with the target heat release rate characteristic Hs to calculate deviation between the prediction and the target (Step S6).

Next, the correction unit 76 derives a correction value for correcting the fuel injection amount or fuel injection timing temporarily set at Step S5 so as to correct the deviation calculated in Step S6 (Step S7). For example, in a case where a peak value of the first peak HAp in the pre-combustion portion HA is predicted to be larger or smaller than a peak value in the target heat release rate characteristic Hs, correction is performed to reduce or increase a fuel injection amount. Further, in a case where a generation timing of the first peak HAp is predicted to be later or earlier than a generation timing in the target heat release rate characteristic Hs, correction for advancing or retarding a fuel injection timing is performed. As a matter of course, if the combustion environmental factor is within a predetermined center range that does not require correction, the correction operation by the correction unit 76 is not performed.

After the above, the injection setting unit 74 finally sets a fuel injection amount and a fuel injection timing of the first pilot injection P11, the second pilot injection P12, and the main injection P2 with reference to the correction value obtained in Step S7 (Step S8). Then, the injection setting unit 74 controls the injector 15 as the above setting to execute fuel injection.

### [Function and effect]

According to the fuel injection control device for a diesel engine according to the present embodiment described above, the injection setting unit 74 performs control to obtain the target heat release rate characteristic Hs by setting (an injection amount or injection timing) of the pilot injection P1 (the first pilot injection P11). In a case where fuel injection is performed by being divided into the pilot injection P1 (pre-injection) and the main injection P2 (post-injection), an ignition time and the like are determined exclusively based on an execution situation of the pilot injection P1. If a mode of the pilot injection P1 is defined, combustion accompanying the main injection P2 will be a relatively robust combustion. Therefore, by appropriately changing the fuel injection amount or the fuel injection timing of the pilot injection P1, it is possible to precisely perform the control to obtain the target heat release rate characteristic Hs.

Further, the prediction unit 75 predicts an occurrence time or a peak value of the first peak HAp with reference to a combustion environmental factor. Even if the fuel injection amount or fuel injection timing of the pilot injection P1 is set to obtain the target heat release rate characteristic Hs, there may be a case where the first peak HAp does not occur in an intended mode due to a combustion environmental factor. In view of this point, the correction unit 76 corrects the fuel injection amount or fuel injection timing of the pilot injection P1 according to a prediction result of a mode of the first peak HAp obtained by the prediction unit 75. In this manner, even if a combustion environmental factor acts variously on the combustion chamber 6, it is possible to allow combustion which achieves the target heat release rate characteristic Hs to be performed. Therefore, combustion noise, such as diesel knocking noise, can be precisely suppressed.

The prediction unit 75 obtains a deviation between the predicted heat release rate characteristic Hp and the target heat release rate characteristic Hs using the prediction model formula as exemplified in FIG. 12B and FIG. 13C. That is, it is possible to correct the deviation of the first peak HAp from the target heat release rate characteristic Hs by a feedforward method, not by the feedback method. Therefore, the generation of combustion noise can be prevented.

Further, a peak interval between the first peak EAp and the second peak EBp is set to an interval at which an amplitude of a pressure wave due to fuel combustion of the pilot injection P1 and an amplitude of a pressure wave due to fuel combustion of the main injection P2 cancel each other. In this manner, pressure waves generated by the pilot injection P1 and the main injection P2 can cancel each other. In this manner, combustion noises generated by the pilot injection P1 and the main injection P2 cancel each other, and the combustion noise can be suppressed to an extremely low level.

### [Variation]

Although the embodiment of the present invention has been described above, the present invention is not limited to the above, and, for example, a variation as described below can be employed.
(1) In the above embodiment, an example in which the pilot injection P1 and the main injection P2 are executed is shown as a fuel injection pattern. This is an example and may be accompanied by other injections. For example, after the main injection P2, after-injection may be performed to suppress generation of soot. Further, the above embodiment shows an example in which the pilot injection P1 (pre-injection) is executed two times separately in the first pilot injection P11 and the second pilot injection P12. Instead of the above, the pilot injection P1 may be a single injection or three or more injections.
(2) The above embodiment shows an example in which the cavity 5C of the piston 5 that defines the bottom surface of the combustion chamber 6 has a two-stage egg shape including the first cavity portion 51 and the second cavity portion 52. The fuel injection control of the present invention is also applicable to a case where the cavity 5C having a hollow shape other than the two-stage egg shape is included.

Note that the specific embodiment described above discloses a fuel injection control device and control method of a diesel engine having a configuration described below.

A fuel injection control device for a diesel engine according to an aspect of the present invention includes a fuel injection valve that injects fuel into a combustion chamber, and a fuel injection control unit that controls operation of the fuel injection valve. The fuel injection control unit includes a split injection control unit that causes the fuel injection valve to execute pre-injection for injecting fuel at a predetermined first timing and post-injection for injecting fuel at a second timing that is later than the pre-injection, a setting unit that sets a fuel injection amount or a fuel injection timing in the pre-injection so as to obtain a target heat release rate characteristic, by which a ratio of a first peak, which is a rising peak of a heat release rate in the combustion chamber accompanying the pre-injection, and a second peak, which is a rising peak of a heat release rate in the combustion chamber accompanying the post-injection, becomes a target value set in advance, a prediction unit that predicts an occurrence time of the first peak or a peak value of the first peak based on the fuel injection amount or the fuel injection timing set by the setting unit and a parameter related to a combustion environmental factor of a diesel engine before the split injection control unit causes the fuel injection valve to execute the pre-injection based on the fuel injection amount or the fuel injection timing set by the setting unit, and a correction unit that corrects the fuel injection amount or the fuel injection timing set by the setting unit based on the occurrence time or the peak value predicted by the prediction unit.

According to this fuel injection control device, the setting unit performs control so that the target heat release rate characteristic can be obtained by setting (an injection amount or an injection timing) of the pre-injection. In a case where fuel injection is performed by being divided into the pre-injection and the post-injection, an ignition timing and the like are determined exclusively based on an execution situation of the pre-injection. If a mode of the pre-injection is defined, combustion accompanying the post-injection will be a relatively robust combustion. Therefore, by appropriately changing the fuel injection amount or the fuel injection timing of the pre-injection, it is possible to precisely perform the control to obtain the target heat release rate characteristic. Note that if a mode (injection amount and injection timing) of the post-injection is changed proactively, an entire combustion period may be shifted, which may affect the fuel efficiency and torque.

Furthermore, the prediction unit predicts an occurrence time of the first peak or its peak value with reference to a parameter related to a combustion environmental factor. Even if the fuel injection amount or fuel injection timing of the pre-injection is set to obtain the target heat release rate characteristic, there may be a case where the first peak does not occur in an intended mode due to a parameter related to the combustion environmental factor. In view of this point, the correction unit corrects the fuel injection amount or fuel injection timing of the pre-injection according to a prediction result of a mode of the first peak obtained by the prediction unit. In this manner, even if the parameter related to the combustion environmental factor acts variously on the combustion chamber, it is possible to allow combustion which achieves the target heat release rate characteristic to be performed. Therefore, combustion noise, such as diesel knocking noise, can be precisely suppressed.

In the fuel injection control device described above, it is desirable that the correction unit correct a fuel injection amount in the pre-injection in a case where a peak value of the first peak predicted by the prediction unit deviates from a peak value based on the target heat release rate characteristic.

The fuel injection amount of the pre-injection tends to affect combustion energy, and has high sensitivity for a peak value of the first peak. Accordingly, by correcting the fuel injection amount, the peak value can be made to coincide with or approach a peak value in the target heat release rate characteristic relatively easily.

In the fuel injection control device described above, it is desirable that the correction unit correct a fuel injection timing in the pre-injection in a case where an occurrence time of the first peak predicted by the prediction unit deviates from an occurrence time based on the target heat release rate characteristic.

The fuel injection timing of the pre-injection easily affects an ignition time to fuel, and has high sensitivity for an occurrence time of the first peak. Accordingly, by correcting the fuel injection timing, the first peak can be made to coincide with or approach a first peak occurrence time in the target heat release rate characteristic relatively easily.

It is desirable that the fuel injection control device further include a storage unit that stores a prediction model formula for predicting a fluctuation of an occurrence time of the first peak or a peak value of the first peak with respect to the target heat release rate characteristic, based on a parameter related to a combustion environmental factor of the diesel engine, and the prediction unit perform the prediction using the prediction model formula.

According to this fuel injection control device, it is possible to correct the deviation of the first peak with respect to the target heat release rate characteristic by the feedforward method by using the prediction model formula. Therefore, the generation of combustion noise can be prevented.

In the fuel injection control device described above, it is desirable that the setting unit set the fuel injection amount or the fuel injection timing so that an interval between a time at which the first peak occurs and a time at which the second peak occurs is an interval at which an amplitude of a pressure wave due to combustion of fuel in the pre-injection and an amplitude of a pressure wave due to combustion of fuel in the post-injection cancel each other.

By setting a peak interval between the first peak and the second peak as described above, it is possible to make a pressure wave (sound wave) accompanying the pre-injection and a pressure wave accompanying the post-injection cancel each other. In this manner, combustion noises generated by the pre-injection and the post-injection cancel each other, and the combustion noise can be suppressed to an extremely low level.

In the above-described fuel injection control device, it is desirable that the split injection control unit cause the post-injection to be executed as main injection where the second timing is near a compression top dead center, and cause the pre-injection to be executed as pilot injection where the first timing is earlier than the main injection.

By causing the pre-injection to be executed as the pilot injection and the post-injection to be executed as the main injection, torque can be efficiently generated while shortening of a combustion period and suppression of soot are achieved.

In the above-described fuel injection control device, it is desirable that a portion of the combustion chamber be defined by a crown surface of a piston, and the crown surface of the piston be provided with a cavity, the cavity include a first cavity portion disposed in a radial center region of the crown surface and including a first bottom portion having a first depth in a cylinder axial direction, a second cavity portion disposed on an outer peripheral side of the first cavity portion on the crown surface and including a second bottom portion having a depth shallower than the first depth in a cylinder axial direction, and a connecting portion that connects the first cavity portion and the second cavity portion, the fuel injection valve inject fuel toward the cavity, and be disposed at or near a radial center of the combustion chamber, and the split injection control unit set the first timing such that fuel injection by the pilot injection is directed to the connecting portion.

According to this fuel injection control device, fuel injection of the pilot injection is executed toward the connecting portion. Accordingly, an air utilization rate in the combustion chamber can be increased. That is, when fuel is injected from the fuel injection valve toward the cavity, a mixture of the fuel and air in the combustion chamber is directed to the first bottom portion and the second bottom portion. Therefore, the air-fuel mixture can be easily directed to radially inner side and outer side of the combustion chamber, air in the combustion chamber can be effectively used to form a homogeneous thin air-fuel mixture, and generation of soot can be suppressed.

In this case, it is desirable that the cavity further include a rising wall region disposed on a radially outer side relative to the second bottom portion of the second cavity portion, the second bottom portion be located below an upper end portion in a cylinder axial direction of the connecting portion, and a lower portion of the rising wall region be located on a radially inner side relative to an upper end position of the rising wall region.

With the formation of the rising wall region, a structure in which the air-fuel mixture cannot easily reach an outer peripheral wall (generally, a cylinder inner peripheral wall) of the combustion chamber can be obtained, and cooling loss can be reduced. Furthermore, the lower portion of the rising wall region has a structure located on a radially inner side with respect to an upper end position of the rising wall region. In this manner, an air-fuel mixture can be prevented from returning too much to a radially inner side of the combustion chamber, and combustion can be performed by effectively utilizing space (squish space) on a radially outer side than the rising wall region.

A fuel injection control method for a diesel engine according to another aspect of the present invention is a method of controlling fuel injection operation for a diesel engine system including a fuel injection valve that injects fuel into a combustion chamber, and a fuel injection control unit that controls operation of the fuel injection valve. The method includes causing the fuel injection valve to execute pre-injection for injecting fuel at a predetermined first timing, and post-injection for injecting fuel at a second timing later than the pre-injection, setting a fuel injection amount or a fuel injection timing in the pre-injection so as to obtain a target heat release rate characteristic, by which a ratio of a first peak, which is a rising peak of a heat release rate in the combustion chamber accompanying the pre-injection, and a second peak, which is a rising peak of a heat release rate in the combustion chamber accompanying the post-injection, becomes a target value set in advance, predicting an occurrence time of the first peak or a peak value of the first peak based on a set fuel injection amount or fuel injection timing and a parameter related to a combustion environmental factor of a diesel engine before the fuel injection valve executes the pre-injection based on the set fuel injection amount or fuel injection timing, and correcting the set fuel injection amount or fuel injection timing based on the predicted occurrence time or peak value.

According to this method, even if the parameter related to the combustion environmental factor acts variously on the combustion chamber, it is possible to allow combustion which achieves the target heat release rate characteristic to be performed. Therefore, combustion noise, such as diesel knocking noise, can be precisely suppressed.

According to the present invention, the fuel injection control device for a diesel engine that performs fuel injection into the combustion chamber by pre-injection and post-injection during one cycle, and can suppress fuel noise as much as possible can be provided.

This application is based on Japanese Patent application No. 2018-128991 filed in Japan Patent Office on July 6, 2018, the contents of which are hereby incorporated by reference.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

## Claims

1. A fuel injection control device (70) for a diesel engine, the fuel injection control device comprising:
a fuel injection valve (15) that injects fuel into a combustion chamber (6); and
a fuel injection control unit (71) that controls operation of the fuel injection valve (15),
wherein
the fuel injection control unit (71) includes
a split injection control unit (73) that causes the fuel injection valve (15) to execute pre-injection (P1) for injecting fuel at a predetermined first timing and post-injection (P2) for injecting fuel at a second timing that is later than the pre-injection,
a setting unit (74) that sets a fuel injection amount or a fuel injection timing in the pre-injection (P1) so as to obtain a target heat release rate characteristic (Hs), by which a ratio of a first peak (HAp), which is a rising peak of a heat release rate in the combustion chamber accompanying the pre-injection (P1), and a second peak (HBp), which is a rising peak of a heat release rate in the combustion chamber accompanying the post-injection (P2), becomes a target value set in advance,
a prediction unit (75) that predicts an occurrence time of the first peak (HAp) or a peak value of the first peak based on the fuel injection amount or the fuel injection timing set by the setting unit (74) and a parameter related to a combustion environmental factor of a diesel engine before the split injection control unit (73) causes the fuel injection valve (15) to execute the pre-injection (P1) based on the fuel injection amount or the fuel injection timing set by the setting unit (74), and
a correction unit (76) that corrects the fuel injection amount or the fuel injection timing set by the setting unit (74) based on the occurrence time or the peak value predicted by the prediction unit (75).

2. The fuel injection control device (70) for a diesel engine according to claim 1, wherein the correction unit (76) corrects a fuel injection amount in the pre-injection (P1) in a case where a peak value of the first peak (HAp) predicted by the prediction unit (75) deviates from a peak value based on the target heat release rate characteristic (Hs).

3. The fuel injection control device (70) for a diesel engine according to claim 1, wherein the correction unit (76) corrects a fuel injection timing in the pre-injection (P1) in a case where an occurrence time of the first peak (HAp) predicted by the prediction unit (75) deviates from an occurrence time based on the target heat release rate characteristic (Hs).

4. The fuel injection control device (70) for a diesel engine according to any one of claims 1 to 3, further comprising:
a storage unit (77) that stores a prediction model formula for predicting a fluctuation of an occurrence time of the first peak (HAp) or a peak value of the first peak with respect to the target heat release rate characteristic (Hs) based on a parameter related to a combustion environmental factor of the diesel engine,
wherein the prediction unit (75) performs the prediction using the prediction model formula.

5. The fuel injection control device (70) for a diesel engine according to any one of claims 1 to 4, wherein the setting unit (74) sets the fuel injection amount or the fuel injection timing so that an interval between a time at which the first peak (HAp) occurs and a time at which the second peak (HBp) occurs becomes an interval at which an amplitude of a pressure wave due to combustion of fuel in the pre-injection and an amplitude of a pressure wave due to combustion of fuel in the post-injection cancel each other.

6. The fuel injection control device (70) for a diesel engine according to any one of claims 1 to 5, wherein the split injection control unit (73) causes the post-injection to be executed as main injection (P2) where the second timing is near a compression top dead center, and causes the pre-injection to be executed as pilot injection (P1) where the first timing is earlier than the main injection.

7. The fuel injection control device (70) for a diesel engine according to claim 6, wherein
a portion of the combustion chamber (6) is defined by a crown surface (50) of a piston (5), and the crown surface of the piston is provided with a cavity (5C),
the cavity includes
a first cavity portion (51) disposed in a radial center region of the crown surface and including a first bottom portion (512) having a first depth in a cylinder axial direction,
a second cavity portion (52) disposed on an outer peripheral side of the first cavity portion on the crown surface and including a second bottom portion (522) having a depth shallower than the first depth in a cylinder axial direction, and
a connecting portion (53) that connects the first cavity portion and the second cavity portion,
the fuel injection valve (15) injects fuel toward the cavity (5C), and is disposed at or near a radial center of the combustion chamber (6), and
the split injection control unit (73) sets the first timing such that fuel injection by the pilot injection (P1) is directed to the connecting portion (53).

8. The fuel injection control device (70) for a diesel engine according to claim 7, wherein
the cavity (5C) further includes a rising wall region (525) disposed on a radially outer side relative to the second bottom portion (522) of the second cavity portion (52),
the second bottom portion (522) is located below an upper end portion in a cylinder axial direction of the connecting portion (53), and
a lower portion of the rising wall region is located on a radially inner side relative to an upper end position of the rising wall region (525).

9. A method of controlling fuel injection operation for a diesel engine system including a fuel injection valve (15) that injects fuel into a combustion chamber (6), and a fuel injection control unit (71) that controls operation of the fuel injection valve, the method comprising:
causing the fuel injection valve (15) to execute pre-injection (P1) for injecting fuel at a predetermined first timing, and post-injection (P2) for injecting fuel at a second timing later than the pre-injection;
setting a fuel injection amount or a fuel injection timing in the pre-injection so as to obtain a target heat release rate characteristic (Hs), by which a ratio of a first peak (HAp), which is a rising peak of a heat release rate in the combustion chamber accompanying the pre-injection, and a second peak (HBp), which is a rising peak of a heat release rate in the combustion chamber accompanying the post-injection, becomes a target value set in advance;
predicting an occurrence time of the first peak (HAp) or a peak value of the first peak based on a set fuel injection amount or fuel injection timing and a parameter related to a combustion environmental factor of a diesel engine before the fuel injection valve (15) executes the pre-injection (P1) based on the set fuel injection amount or fuel injection timing; and
correcting the set fuel injection amount or fuel injection timing based on the predicted occurrence time or peak value.
